# EUROPEAN PATENT APPLICATION

(11) **EP 4 618 645 A1**
(43) Date of publication of application: **17.09.2025**
(21) Application number: 23887775.7
(22) Date of filing: 26.10.2023
(51) Int. Cl.: H04W 64/00

(54) **DATA PROCESSING METHOD, AND APPARATUS**

(30) Priority: 07.11.2022 CN 202211387786
(71) Applicant: Datang Mobile Communications Equipment Co., Ltd., Beijing 100085 (CN)
(72) Inventor: SU, Yuwan, Beijing 100085 (CN); WANG, Da, Beijing 100085 (CN); GAO, Qiubin, Beijing 100085 (CN)
(74) Representative: dompatent von Kreisler Selting Werner - Partnerschaft von Patent- und Rechtsanwälten mbB
(86) International application number: PCT/CN2023/126676
(87) International publication number: WO 2024/099084

(57) **Abstract**

The present disclosure provides a data processing method and apparatus and relates to the field of communication technologies. The method includes: sending, by a network device, first indication information, wherein the first indication information is used to determine first user equipment (UE); receiving, by the network device, first information and/or a first signal sent by a second user equipment, wherein the first information and/or the first signal is sent by the second user equipment when the second user equipment determines that the second user equipment serves as the first user equipment; sending, by the network device, the received first information and/or first signal to a first device, or, according to the received first information and/or first signal, performing, by the network device, one or more of the following: training of a first model, performance monitoring of the first model, and updating of the first model. The first model is used to determine UE location-related information.

## Description

The present application is filed based on and claims the priority of Chinese Application No. 202211387786.8 filed on November 7, 2022, entitled "Data processing method and apparatus", the disclosure of which are incorporated in its entirety by reference herein.

### TECHNICAL FIELD

The present disclosure relates to the field of communication technologies, and in particular to a data processing method and apparatus.

### BACKGROUND

There are many challenges in wireless communication systems, such as nonlinear problems, time complexity of computing optimal solutions, certain issues that are not easily described accurately by formulas or models, error accumulation between different modules in radio links preventing holistic optimization, and increased difficulty in optimization due to variations in non-ideal factors in practical applications. Artificial Intelligence (AI)/Machine Learning (ML) has demonstrated exceptional capabilities in internet-related fields such as image recognition and speech recognition. Therefore, it is proposed to apply AI/ML to positioning.

For the implementation of AI/ML-based positioning, substantial data is needed to train AI/ML models, monitor performance of the AI/ML models, and update the AI/ML models to ensure positioning accuracy. However, in the related art, the data used to train the AI/ML models, monitor the AI/ML models and update the AI/ML models, needs to be provided by a Positioning Reference Unit (PRU). However, in specific scenarios such as Indoor Factory Dense Hall (InF-DH) where only a limited number of PRUs are available, the data requirements for training the AI/ML models, monitoring performance of the AI/ML models and updating the AI/ML models, cannot be met.

### SUMMARY

An object of embodiments of the present disclosure is to provide a data processing method and apparatus, which can solve the problem that in a case of a small number of PRUs, data provided by the small number of PRUs cannot meet the data requirement for training AI/ML models, monitoring performance of AI/ML models, and updating AI/ML models.

In order to achieve the above object, one embodiment of the present disclosure provides a data processing method, including:
sending, by a network device, first indication information; wherein the first indication information is used to determine first user equipment (UE);
receiving, by the network device, first information and/or a first signal sent by a second user equipment; wherein the first information and/or the first signal is sent by the second user equipment when the second user equipment determines that it serves as the first user equipment;
sending, by the network device, the received first information and/or first signal to a first device; or, according to the received first information and/or first signal, performing, by the network device, one or more of the following: training of a first model, performance monitoring of the first model, and updating of the first model;
wherein the first model is used to determine location-related information of the user equipment.

Optionally, the sending, by a network device, first indication information, includes:
sending, by the network device, the first indication information, via broadcasting or multicasting.

Optionally, after the network device receives the first signal, the method further includes:
determining, by the network device, first information according to the first signal.

Optionally, the first information includes at least one of the following:
channel observation result; location-related information of the first user equipment.

Optionally, the first indication information includes one or more of the following:
range information that the location-related information of the first user equipment needs to meet;
quality information that the location-related information of the first user equipment needs to meet;
threshold information that needs to be met between the location-related information of the first user equipment and location-related information of a first reference device, wherein the first reference device is a device used to determine the first user equipment.

Optionally, the location-related information includes one or more of the following: location information; time-related information; angle-related information; path indication information.

Optionally, the range information that the location-related information of the first user equipment needs to meet, includes one or more of the following:
a location range that the location information of the first user equipment needs to meet;
a time range that the time-related information of the first user equipment needs to meet;
an angle range that the angle-related information of the first user equipment needs to meet.

Optionally, the quality information that the location-related information of the first user equipment needs to meet, includes:
location quality information that the location information of the first user equipment needs to meet;
time quality information that the time-related information of the first user equipment needs to meet;
angle quality information that the angle-related information of the first user equipment needs to meet;
path indication quality information that the path indication information of the first user equipment needs to meet.

Optionally, threshold information that needs to be met between the location-related information of the first user equipment and the location-related information of the first reference device, includes:
a distance threshold that a distance between a location of the first user equipment and a location of the first reference device needs to meet;
a time threshold that a time difference between the time-related information of the first user equipment and time-related information of the first reference device needs to meet;
an angle threshold that an angle difference between the angle-related information of the first user equipment and angle-related information of the first reference device needs to meet.

Optionally, the method further includes:
determining, by the network device, reference location-related information and actual location-related information of a second reference device;
determining, by the network device, the first indication information according to the reference location-related information and the actual location-related information.

Optionally, the second reference device includes one or more of the following:
positioning reference unit (PRU); a user equipment that is aware of actual location-related information.

Optionally, the method further includes:
receiving, by the network device, one or more of the following items sent by the second reference device:
reference location-related information of the second reference device; actual location-related information of the second reference device; and an obtaining method of the actual location-related information.

Optionally, the determining, by the network device, the first indication information according to the reference location-related information and the actual location-related information, includes:
determining, by the network device, a first reference device according to the reference location-related information and the actual location-related information;
determining, by the network device, the first indication information according to the first reference device.

Optionally, the determining, by the network device, a first reference device according to the reference location-related information and the actual location-related information, includes:
calculating, by the network device, an error between the reference location-related information and the actual location-related information;
determining, by the network device, the first reference device according to the error and an error threshold.

Optionally, determining, by the network device, a first reference device according to the reference location-related information and the actual location-related information, includes:
sending, by the network device, an error threshold, wherein the error threshold is used to determine the first reference device;
determining, by the network device, a second reference device that sends the reference location-related information and the actual location-related information, as the first reference device; wherein an error between the reference location-related information and the actual location-related information of the first reference device meets the error threshold.

Optionally, the method further includes:
receiving, by the network device, actual location-related information sent by a third reference device; wherein the third reference device sends the actual location-related information when the third reference device receives the error threshold and determines that an error between reference location-related information and actual location-related information of the third reference device does not meet the error threshold.

Optionally, the first information and/or first signal received by the network device is sent by the first user equipment when the first user equipment receives the first indication information and the location-related information of the first user equipment meets the first indication information.

Optionally, the first indication information further includes: location-related information of the first reference device.

Optionally, a time when the reference location-related information of the second reference device is determined, and a time when the actual location-related information of the second reference device is determined, both meet a first validity time; and/or
a time difference between a time when the reference location-related information of the second reference device is determined and a time when the actual location-related information of the second reference device is determined, meets a time threshold.

Optionally, the method further includes:
determining, by the network device, the first validity time and/or the time threshold.

In order to achieve the above object, one embodiment of the present disclosure provides a data processing method, including:
receiving, by a second user equipment (UE), first indication information; wherein the first indication information is used to determine a first user equipment to obtain first information of the first user equipment;
wherein the first information is used for one or more of the following:
   training of a first model; performance monitoring of the first model; updating of the first model;
   wherein the first model is used to determine location-related information of the user equipment.

Optionally, after the second user equipment receives the first indication information, the method further includes:
sending, by the second user equipment, first information and/or first signal;
wherein the first signal is used to determine the first information.

Optionally, the sending, by the second user equipment, first information and/or first signal, includes:
when the second user equipment receives the first indication information and determines that location-related information of the second user equipment meets the first indication information, sending, by the second user equipment, the first information and/or the first signal.

In order to achieve the above object, one embodiment of the present disclosure provides a data processing method, including:
obtaining, by a network device, first information of third user equipment (UE);
determining, by the network device, first user equipment from the third user equipment according to the first indication information;
wherein the first information of the first user equipment is used for one or more of the following: training of the first model; performance monitoring of the first model; updating of the first model;
wherein the first model is used to determine location-related information of the user equipment.

Optionally, the obtaining, by a network device, first information of third user equipment (UE), includes:
receiving, by network device, the first information sent by the third user equipment.

Optionally, the obtaining, by a network device, first information of third user equipment (UE), includes:
receiving, by network device, a first signal sent by the third user equipment;
determining, by network device, first information according to the first signal.

Optionally, the method further includes:
performing, by the network device, one or more of the following according to the first information of the first user equipment:
training of the first model; performance monitoring of the first model; and updating of the first model.

Optionally, the method further includes:
determining, by the network device, reference location-related information and actual location-related information of a second reference device;
determining, by the network device, the first indication information according to the reference location-related information and the actual location-related information.

In order to achieve the above object, one embodiment of the present disclosure provides a data processing method, including:
sending, by third user equipment (UE), first information and/or first signal;
wherein the first signal is used to determine the first information;
when the third user equipment serves as first user equipment, the first information is used for one or more of the following: training of a first model; performance monitoring of the first model; updating of the first model;
wherein the first model is used to determine location-related information of the user equipment.

Optionally, the first information includes at least one of the following:
channel observation result; location-related information of the first user equipment.

In order to achieve the above object, one embodiment of the present disclosure provides a data processing apparatus, including: a memory, a transceiver, and a processor; wherein the memory is used to store program instructions; the transceiver is used to send and receive data under control of the processor; the processor is used to read the program instructions in the memory and perform the following operations:
sending first indication information; wherein the first indication information is used to determine first user equipment (UE);
receiving first information and/or a first signal sent by a second user equipment; wherein the first information and/or the first signal is sent by the second user equipment when the second user equipment determines that it serves as the first user equipment;
sending the received first information and/or first signal to a first device; or, according to the received first information and/or first signal, performing one or more of the following: training of a first model, performance monitoring of the first model, and updating of the first model;
wherein the first model is used to determine location-related information of the user equipment.

In order to achieve the above object, one embodiment of the present disclosure provides a data processing apparatus, including:
a first sending module used to send first indication information; wherein the first indication information is used to determine first user equipment (UE);
a first receiving module used to receive first information and/or a first signal sent by a second user equipment; wherein the first information and/or the first signal is sent by the second user equipment when the second user equipment determines that it serves as the first user equipment;
a first processing module used to send the received first information and/or first signal to a first device; or, according to the received first information and/or first signal, perform one or more of the following: training of a first model, performance monitoring of the first model, and updating of the first model;
wherein the first model is used to determine location-related information of the user equipment.

In order to achieve the above object, one embodiment of the present disclosure provides a data processing apparatus, including: a memory, a transceiver, and a processor; wherein the memory is used to store program instructions; the transceiver is used to send and receive data under control of the processor; the processor is used to read the program instructions in the memory and perform the following operations:
receiving first indication information; wherein the first indication information is used to determine a first user equipment to obtain first information of the first user equipment;
wherein the first information is used for one or more of the following:
   training of a first model; performance monitoring of the first model; updating of the first model;
   wherein the first model is used to determine location-related information of the user equipment.

In order to achieve the above object, one embodiment of the present disclosure provides a data processing apparatus, including:
a second receiving module used to receive first indication information; wherein the first indication information is used to determine a first user equipment to obtain first information of the first user equipment;
wherein the first information is used for one or more of the following:
   training of a first model; performance monitoring of the first model; updating of the first model;
   wherein the first model is used to determine location-related information of the user equipment.

In order to achieve the above object, one embodiment of the present disclosure provides a data processing method, including: a memory, a transceiver, and a processor; wherein the memory is used to store program instructions; the transceiver is used to send and receive data under control of the processor; the processor is used to read the program instructions in the memory and perform the following operations:
obtaining first information of third user equipment (UE);
determining first user equipment from the third user equipment according to the first indication information;
wherein the first information of the first user equipment is used for one or more of the following: training of the first model; performance monitoring of the first model; updating of the first model;
wherein the first model is used to determine location-related information of the user equipment.

In order to achieve the above object, one embodiment of the present disclosure provides a data processing method, including:
an obtaining module used to obtain first information of third user equipment (UE);
a first determining module used to determine first user equipment from the third user equipment according to the first indication information;
wherein the first information of the first user equipment is used for one or more of the following: training of the first model; performance monitoring of the first model; updating of the first model;
wherein the first model is used to determine location-related information of the user equipment.

In order to achieve the above object, one embodiment of the present disclosure provides a data processing method, including: a memory, a transceiver, and a processor; wherein the memory is used to store program instructions; the transceiver is used to send and receive data under control of the processor; the processor is used to read the program instructions in the memory and perform the following operations:
sending first information and/or first signal;
wherein the first signal is used to determine the first information;
when the third user equipment serves as first user equipment, the first information is used for one or more of the following: training of a first model; performance monitoring of the first model; updating of the first model;
wherein the first model is used to determine location-related information of the user equipment.

In order to achieve the above object, one embodiment of the present disclosure provides a data processing apparatus, including:
a second sending module used to send first information and/or first signal;
wherein the first signal is used to determine the first information;
when the third user equipment serves as first user equipment, the first information is used for one or more of the following: training of a first model; performance monitoring of the first model; updating of the first model;
wherein the first model is used to determine location-related information of the user equipment.

In order to achieve the above object, one embodiment of the present disclosure provides a processor-readable storage medium, including a computer program stored thereon; wherein the computer program is used to cause a processor to execute the above data processing method.

The aforementioned technical solution of the present disclosure has at least the following beneficial effects.

According to the aforementioned technical solution of the present disclosure, by sending the first indication information, the first information and/or the first signal sent by the first user equipment can be received; and then, the received first information and/or the first signal is sent to the first device; or, at least one of training, performance monitoring and updating of the first model, is performed according to the received first information and/or the first signal, where the first model is used to determine the location-related information of the user equipment, thereby avoiding the problem that in a case of a small number of PRUs, data provided by the small number of PRUs cannot meet the demand.

### BRIEF DESCRIPTION OF THE DRAWINGS

FIG. 1 is a first flowchart of a method according to an embodiment of the present disclosure;
FIG. 2 is a second flowchart of a method according to an embodiment of the present disclosure;
FIG. 3 is a third flowchart of a method according to an embodiment of the present disclosure;
FIG. 4 is a fourth flowchart of a method according to an embodiment of the present disclosure;
FIG. 5 is a first block diagram of an apparatus according to an embodiment of the present disclosure;
FIG. 6 is a first schematic diagram of modules of an apparatus according to an embodiment of the present disclosure;
FIG. 7 is a second block diagram of an apparatus according to an embodiment of the present disclosure;
FIG. 8 is a second schematic diagram of modules of an apparatus according to an embodiment of the present disclosure;
FIG. 9 is a third block diagram of an apparatus according to an embodiment of the present disclosure; and
FIG. 10 is a fourth schematic diagram of modules of an apparatus according to an embodiment of the present disclosure.

### DETAILED DESCRIPTION

In the embodiment of the present disclosure, the term "and/or" describes association relationship of associated objects, indicating that there can be three relationships, for example, A and/or B means that there are three situations: there is A alone, there are both A and B, there is B alone. The character "/" generally indicates that before and after related objects are in an "or" relationship.

In the embodiment of the present disclosure, the term "plurality" refers to two or more than two, and other quantifiers are similar.

The technical solutions in the embodiments of the present disclosure will be clearly and completely described below with reference to the accompanying drawings in the embodiments of the present disclosure. Obviously, the described embodiments are only some embodiments of the present disclosure, rather than all embodiments. Based on the embodiments in the present disclosure, all other embodiments obtained by those of ordinary skill in the art without creative efforts fall within the scope of protection of the present disclosure.

The embodiments of the present disclosure provide a data processing method and apparatus. The method and the apparatus are based on the same application concept; since the principles of solving problems by the method and the apparatus are similar, the implementation of the apparatus and the method can refer to each other, and repeated parts will not be repeated.

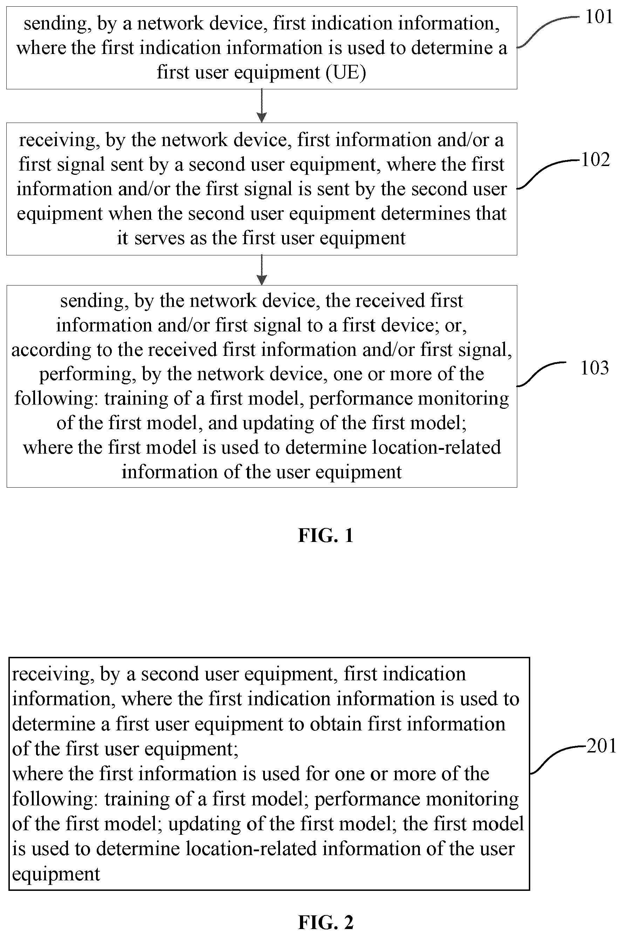

As shown in FIG. 1, a data processing method according to an embodiment of the present disclosure includes:
Step 101: sending, by a network device, first indication information, where the first indication information is used to determine a first user equipment (UE).

In this step, the first indication information is used to determine the first user equipment; that is, a user equipment (i.e., a second user equipment) that receives the first indication information, determines whether it can serve as the first user equipment based on the first indication information, so as to provide the network device with required first information.

Step 102: receiving, by the network device, first information and/or a first signal sent by a second user equipment, where the first information and/or the first signal is sent by the second user equipment when the second user equipment determines that it serves as the first user equipment.

In this step, after the network device sends the first indication information, the network device can receive the first information and/or the first signal sent by the user equipment; the first information is used for at least one of training, performance monitoring and updating of a first model, and the first signal is used to determine the first information.

Step 103: sending, by the network device, the received first information and/or first signal to a first device; or,
according to the received first information and/or first signal, performing, by the network device, one or more of the following: training of a first model, performance monitoring of the first model, and updating of the first model;
where the first model is used to determine location-related information of the user equipment.

On the one hand, the network device performs training of the first model, performance monitoring of the first model, updating of the first model and other processing. On the other hand, the network device does not perform training of the first model, performance monitoring of the first model, updating of the first model and other processing, and then, after the network device obtains the first information, the network device sends the first information to the first device, and the first device is a device that performs at least one of the processing such as training of the first model, performance monitoring of the first model, updating of the first model.

In this way, by sending the first indication information in accordance with the above steps 101-102, the network device can receive the first information and/or the first signal sent by the first user equipment; and then, the network device sends the received first information and/or the first signal to the first device; or, the network device performs at least one of training, performance monitoring and updating of the first model, according to the received first information and/or the first signal, where the first model is used to determine the location-related information of the user equipment, thereby avoiding the problem that in a case of a small number of PRUs, data provided by the small number of PRUs cannot meet the demand.

In this embodiment, the first model may be an AI/ML model for determining location-related information of the user equipment.

In this embodiment, the network device may be a next generation NodeB (gNB), a transmission reception point (TRP), a location management function (LMF) network element, a data collection device, etc.

Optionally, in this embodiment, the first information sent by the first user equipment is first information of a first time period. At this point, the first user equipment meets the mobility requirement indicated by the network device, and the network device can configure the first time period. The duration of the first time period can be related to the mobility requirement. For example, the first time period corresponding to the stationary first user equipment is of a first value, and the first time period corresponding to the slow-moving first user equipment is of a second value, and the first value is greater than the second value.

Optionally, the first user equipment may be online in real time so as to send the first information and/or the first signal in a timely manner.

Optionally, the sending, by the network device, the first indication information, includes:
sending, by the network device, the first indication information, via broadcasting or multicasting.

The sending the first indication information via broadcasting may include: sending a system information block (SIB), where the SIB carries the first indication information.

The sending the first indication information via multicasting may include: sending group common downlink control information (DCI) signaling, where the group common DCI signaling carries the first indication information. Here, the group common DCI signaling may be a dedicated signaling for the first indication information. The group common DCI signaling includes multiple information fields. One information field includes N (N is greater than or equal to 1) bits. One information field is for one group of UEs, and one group of UEs includes at least one UE. The correspondence between the information field and the UE is configured by high-level signaling.

As an implementation, one group common DCI signaling may carry multiple information fields to indicate different first indication information. The same first indication information is indicated to at least one UE within the same multicast group; UEs in different groups are distinguished by different information fields, and thus obtain different first indication information.

Of course, the network device can send the first indication information in a unicast manner. At this point, if the second user equipment that receives the first indication information cannot serve as the first user equipment, the second user equipment will not send the first information and/or first signal to the network device, and the corresponding network device will not receive it.

Optionally, after the network device receives the first signal, the method further includes:
determining, by the network device, first information according to the first signal.

That is, the first user equipment sends a first signal to the network device; and after the network device receives the first signal, the network device needs to further determine the first information based on the first signal. The first information determined by the network device based on the received first signal also includes other forms of equivalent information that can be used for training, performance monitoring, or updating of the first model.

Here, the first signal may be an uplink sounding reference signal (UL-SRS) or other uplink signals, and the embodiment does not specifically limit the form of the first signal. The network device may calculate the first information according to the first signal and a preset positioning method.

For example, for UE-based positioning, the training of the AI model can be completed on the UE side or on the network side. When the training of the AI model is completed on the UE side, the network device (such as LMF) obtains the first information and sends the first information to the UE side for training. When the training of the AI model is completed on the network side, the network device obtains the first information and trains the AI model. Of course, the network device that obtains the first information, may be a data collection device or a device with a data collection function, and may send, after obtaining the first information, the collected first information to the LMF for AI model training.

In addition, for UE-assisted/LMF-based positioning, the training of the AI model can be completed on the UE side or on the network side, and the network device can be the LMF. For NG-RAN node assisted positioning, the training of the AI model can be completed at a transmission-reception point (TRP) or gNB side or the LMF side. Before the training of the first model, the performance monitoring of the first model, the updating of the first model, etc. are performed on any device such as UE, TRP, gNB, LMF, etc., if the network device and the device that performs the training of the first model, the performance monitoring of the first model, and the updating of the first model are different, then, after the network device obtains the first information, the network device will send the collected first information to the device that performs the training of the first model, the performance monitoring of the first model, and the updating of the first model.

Optionally, in this embodiment, the first information includes at least one of the following:
channel observation result; location-related information of the first user equipment.

As an implementation, the channel observation result includes one or more of: channel impulse response (CIR); channel frequency response (CFR); reference signal received power (RSRP); time-related information, such as time of arriva (ToA), reference signal time difference (RSTD), relative time of arrival (RTOA), date of arriva; angle-related information, such as angle of arrival (AoA); reference signal received path power (RSRPP).

In this embodiment, the location-related information of the first user equipment may also be referred to as reference location-related information of the first user equipment.

It is to be noted that, in this embodiment, the reference location-related information is a calculated location-related information.

Optionally, the location-related information includes one or more of the following:
location information; time-related information; angle-related information; path indication information.

Here, the expansion of the location-related information is not limited to the location-related information of the first user equipment, but is also applicable to location-related information of other terminal devices and reference devices.

In addition, the expansion of the location-related information also applies to reference location-related information and actual reference location-related information. That is, taking a first reference device as an example, its reference location information includes one or more of the following: location information, time-related information, angle-related information, and path indication information; its actual location information includes one or more of the following: location information, time-related information, angle-related information, and path indication information.

In this embodiment, the location information (which is location information included in the reference location-related information) is obtained by measuring downlink-positioning reference signal (DL-PRS) or UL-SRS and calculating based on a preset positioning method. The preset positioning method can be a trilateration-based positioning, where a device's position is calculated by applying a position of the TRP and time-related information (such as ToA, RSTD, etc.) between the user equipment and the TRP to a corresponding formula. The preset positioning method may also be a positioning method related to a radio access technology (RAT), which will not be repeated here.

In this embodiment, the time-related information, the angle-related information, and the path indication information are all information that can be used to calculate the location information. The path indication information may be a line of sight (LOS) or non-line of sight (NLOS) indication, and the LOS/NLOS indication may be a type of LOS/NLOS or a probability corresponding to LOS/NLOS.

Optionally, the first indication information includes one or more of the following:
range information that the location-related information of the first user equipment needs to meet;
quality information that the location-related information of the first user equipment needs to meet;
threshold information that needs to be met between the location-related information of the first user equipment and the location-related information of a first reference device, where the first reference device is a device used to determine the first user equipment.

Optionally, the range information that the location-related information of the first user equipment needs to meet, includes one or more of the following:
a location range that the location information of the first user equipment needs to meet;
a time range that the time-related information of the first user equipment needs to meet;
an angle range that the angle-related information of the first user equipment needs to meet.

That is, the first indication information includes different range information for different contents of the location-related information.

As an implementation, the location range may be a location range defined by longitude and latitude, or a location range defined by administrative regions, and so on.

As an implementation, if the time-related information of the first user equipment is a first relative time difference between a moment when the first user equipment sends UL-SRS and a moment when an UL-SRS receiving device receives UL-SRS, then, the time range is a range of the first relative time difference. If the time-related information of the first user equipment is a second relative time difference between a moment when a DL-PRS sending device sends DL-PRS and a moment when the first user equipment receives DL-PRS, then the time range is a range of the second relative time difference. Here, the UL-SRS receiving device may be a TRP or a gNB, and the DL-PRS sending device may also be a TRP or a gNB.

As an implementation, if the angle-related information of the first user equipment is a first angle (such as AoD) at which the DL-PRS sending device sends DL-PRS, determined by the first user equipment, then the angle range is a range of the first angle. If the angle-related information of the first user equipment is a second angle at which the first user equipment receives the DL-PRS sent by the DL-PRS sending device, then the angle range is a range of the second angle. If the angle-related information of the first user equipment is a third angle at which the UL-SRS receiving device receives the UL-SRS sent by the first user equipment, then the angle range is a range of the third angle. If the angle-related information of the first user equipment is a fourth angle at which the first user equipment sends UL-SRS, determined by the UL-SRS receiving device, then the angle range is a range of the fourth angle. Here, the UL-SRS receiving device may be a TRP or a gNB, and the DL-PRS sending device may also be a TRP or a gNB.

It is to be noted that, in this embodiment, the angle can also be described using a direction. For example, the first angle can represent a first direction. The first direction can be a range of directions, such as the first direction is [first direction 1, second direction 2], which can be expressed in degrees.

Optionally, the quality information that the location-related information of the first user equipment needs to meet, includes:
location quality information that the location information of the first user equipment needs to meet;
time quality information that the time-related information of the first user equipment needs to meet;
angle quality information that the angle-related information of the first user equipment needs to meet;
path indication quality information that the path indication information of the first user equipment needs to meet.

That is, the first indication information includes different quality information for different contents of the location-related information. In this embodiment, the quality information may represent the credibility, accuracy, error, etc. of the corresponding information.

Optionally, threshold information that needs to be met between the location-related information of the first user equipment and the location-related information of the first reference device, includes:
a distance threshold that a distance between a location of the first user equipment and a location of a first reference device needs to meet;
a time threshold that a time difference between the time-related information of the first user equipment and the time-related information of the first reference device needs to meet;
an angle threshold that an angle difference between the angle-related information of the first user equipment and the angle-related information of the first reference device needs to meet.

As an implementation, the distance threshold that the distance between the location of the first user equipment and the location of the first reference device needs to meet may be a specific value, and then, one user equipment may qualify as the first user equipment if a distance between a location of the one user equipment and a location of the first reference device meets the specific value (i.e., is less than or equal to the specific value). Of course, the distance threshold may also be a specific value range.

As an implementation, the time-related information of the first user equipment/first reference device may be the relative time difference between a moment when the first user equipment/first reference device sends UL-SRS and a moment when the UL-SRS receiving device receives UL-SRS, or the relative time difference between a moment when the DL-PRS sending device sends DL-PRS and a moment when the first user equipment/first reference device receives DL-PRS. Thus, taking the case where the time-related information of the first user equipment is the relative time difference between the moment when the first user equipment sends UL-SRS and the moment when the UL-SRS receiving device receives UL-SRS (i.e., the first relative time difference of the first user equipment), and the time-related information of the first reference device is the relative time difference between a moment when the first reference device sends UL-SRS and a moment when the UL-SRS receiving device receives UL-SRS (i.e., the first relative time difference of the first reference device), as an example, the time threshold is a time threshold that a time difference between the first relative time difference of the first user equipment and the second relative time difference of the second user equipment needs to meet.

As an implementation, the angle-related information of the first user equipment/first reference device may be an angle (such as AoD) at which the DL-PRS sending device sends the DL-PRS, determined by the first user equipment/first reference device, or an angle at which the first user equipment/first reference device receives the DL-PRS sent by the DL-PRS sending device, or an angle at which the UL-SRS receiving device receives the UL-SRS sent by the first user equipment/first reference device, or an angle at which the first user equipment/first reference device sends the UL-SRS, determined by the UL-SRS receiving device. In this way, taking a case where the angle-related information of the first user equipment is an angle (i.e., the first angle) at which the DL-PRS sending device sends the DL-PRS, determined by the first user equipment, and the angle-related information of the first reference device is an angle (i.e., the second angle) at which the DL-PRS sending device sends the DL-PRS, determined by the first reference device, as an example, the angle threshold is a time threshold that an angle difference between the first angle and the second angle needs to meet.

Of course, the above detailed description of the time-related information of the first user equipment/first reference device and the angle-related information of the first user equipment/first reference device is also applicable to other user equipment/reference devices.

In this embodiment, the network device needs to determine the first indication information before performing the step 101. Therefore, optionally, the method further includes:
determining, by the network device, reference location-related information and actual location-related information of a second reference device;
determining, by the network device, the first indication information according to the reference location-related information and the actual location-related information.

That is, the network device further determines the first indication information by determining the reference location-related information and the actual location-related information of the second reference device.

In this embodiment, the actual location-related information can also be understood as real location-related information, which is accurate location-related information. The reference location-related information can be understood as calculated and estimated location-related information, for example, a location included in the reference location-related information is a location calculated according to the RAT positioning method and has a certain error with the actual location and is not accurate.

Of course, the network device can also directly determine the first indication information without the reference location-related information and the actual location-related information of the second reference device. For example, the network device directly defines the quality information that the location-related information of the first user equipment needs to meet.

Optionally, the second reference device includes one or more of the following:
positioning reference unit (PRU); a user equipment that is aware of actual location-related information.

Here, the PRU is aware of its own actual location-related information; and the user equipment that is aware of actual location-related information may be a user equipment with satellite positioning capability, or may be a user equipment with other high-precision positioning capabilities.

When the second reference device is a PRU, for UE-based positioning, the PRU can measure the DL-PRS sent by the TRP to obtain a channel observation result, and then solve location information of the corresponding PRU according to the channel observation result through a preset positioning method. The location information is calculated or estimated location information; that is, the location information included in the reference location-related information, can be referred as reference location information. At this point, the reference location information and actual location information corresponding to the PRU (the location information included in the actual location-related information, such as actual coordinate position) can be known. Here, the calculation or estimation method of reference location information is a non-AI-based position determination method, i.e., a method that calculates the position through a trilateration algorithm using the position of TRP and measurement quantities obtained by measuring reference signals. This calculation or estimation method of reference location information applies to all embodiments in the specification. Additionally, for downlink positioning techniques, such as NR DL-TDOA, the UE can obtain RSTD by measuring DL-PRS, and the UE's position can be calculated via a trilateration algorithm based on positions of multiple TRPs and corresponding multiple RSTDs.

When the second reference device is a UE with known actual location-related information, for UE-based positioning, the UE can measure a DL-PRS sent by the TRP to obtain a channel observation result, and then calculate corresponding location information of the UE based on the channel observation result through a preset positioning method. The location information is calculated or estimated location information, that is, the location information included in the reference location-related information can be called reference location information. At this point, the UE can obtain satellite positioning location information through a global satellite positioning system such as global positioning system (GPS) or global navigation satellite system (GNSS) or Beidou, that is, the location information included in the actual location-related information can be called actual location information. There is no limitation on other methods for determining the actual location information.

When the second reference device is a PRU, for UE-assisted/LMF-based positioning, the PRU can measure the DL-PRS sent by the TRP to obtain a channel observation result (which can be CIR, CFR, RSRP, etc.), and then estimate time-related information, angle-related information, path indication information, etc. based on the channel observation result through a preset positioning method. That is, the time-related information, angle-related information, and path indication information included in the reference location-related information can be called reference time-related information, reference angle-related information, and reference path indication information. At this point, the actual location-related information of the PRU can include the time-related information, angle-related information, and path indication information, which can be determined according to the actual location information of the PRU and the location of the TRP, and which can be called actual time-related information, actual angle-related information, and actual path indication information.

When the second reference device is a UE aware of actual location-related information, for UE-assisted/LMF-based positioning, the UE can measure the DL-PRS sent by the TRP to obtain a channel observation result (which can be CIR, CFR, RSRP, etc.), and then estimate time-related information, angle-related information, path indication information, etc. based on the channel observation result through a preset positioning method. That is, the time-related information, angle-related information, and path indication information included as reference location-related information can be called reference time-related information, reference angle-related information, and reference path indication information. At this point, the UE can obtain satellite positioning position information through a global satellite positioning system such as GPS or GNSS or Beidou, that is, the position information included as actual location-related information can be called actual position information, so that the time-related information, angle-related information, and path indication information determined according to the actual position information and the TRP position can be called actual time-related information, actual angle-related information, and actual path indication information.

When the second reference device is a PRU, for NG-RAN node assisted positioning, the TRP can measure UL-PRS sent by the PRU to obtain a channel observation result (which can be CIR, CFR, RSRP, etc.), and then estimate time-related information, angle-related information, path indication information, etc. based on the channel observation result through a preset positioning method. That is, the time-related information, angle-related information, and path indication information included as the reference location-related information can be called reference time-related information, reference angle-related information, and reference path indication information. At this point, the actual location-related information of the PRU can include the time-related information, angle-related information, and path indication information determined according to the actual position information of the PRU and the position of the TRP, which can be called actual time-related information, actual angle-related information, and actual path indication information.

When the second reference device is a UE of aware actual location-related information, for NG-RAN node assisted positioning, TRP can measure UL-PRS sent by the UE to obtain a channel observation result (which can be CIR, CFR, RSRP, etc.), and then estimate time-related information, angle-related information, path indication information, etc. based on the channel observation result through a preset positioning method. That is, the time-related information, angle-related information, and path indication information included as reference location-related information can be called reference time-related information, reference angle-related information, and reference path indication information. At this point, the UE can obtain satellite positioning location information through a global satellite positioning system such as GPS or GNSS or Beidou, that is, the location information included as actual location-related information can be called actual location information, so that the time-related information, angle-related information, and path indication information determined based on the actual location information and the TRP position can be called actual time-related information, actual angle-related information, and actual path indication information.

Optionally, the method further includes:
receiving, by the network device, one or more of the following items sent by the second reference device:
reference location-related information of the second reference device; actual location-related information of the second reference device; and an obtaining method of the actual location-related information.

Here, after receiving the above one or more items sent by the second reference device, the network device can determine applicable reference location-related information and actual location-related information to determine the first indication information. For example, based on the obtaining method, the actual location-related information with higher accuracy is selected to determine the first indication information.

Optionally, the determining, by the network device, the first indication information according to the reference location-related information and the actual location-related information, includes:
determining, by the network device, a first reference device according to the reference location-related information and the actual location-related information;
determining, by the network device, the first indication information according to the first reference device.

As an implementation, after determining the first reference device, a first range can be determined based on a position (actual coordinate position or calculated position) of the first reference device and a preconfigured threshold; and it may be further determined that a position range that the position information of the first user equipment included in the first indication information needs to meet is the first range. Here, the preconfigured threshold can be a preconfigured distance, and the first range is determined based on the preconfigured distance with the position of the first reference device as a center. The first range can be expressed as a range in longitude and latitude. For example, the first range includes a first longitude range and a first latitude range, the first longitude range is [longitude 1, longitude 2], and the first latitude range is [latitude 1, latitude 2].

As an implementation, after determining the first reference device, a first distance may be determined, and it may be further determined that a distance threshold that a distance between the position of the first user equipment included in the first indication information and the position of the first reference device needs to meet, is equal to the first distance.

As an implementation, after determining the first reference device, a first direction can be determined, and it may be further determined that an angular threshold that an angle difference between the angle-related information of the first user equipment included in the first indication information and the angular-related information of the first reference device needs to meet, is equal to an angle corresponding to the first direction.

As an implementation, after determining the first reference device, a time range (such as a first ToA range) can be determined based on ToA (actual ToA or calculated ToA) of the first reference device and a preconfigured threshold (such as a preused toA offset); and it may be further determined that the first indication information includes the first ToA range. For example, for a certain TRP, a calculated ToA from a target reference device to the TRP is recorded as noisy ToA, then the first ToA range is [noisy ToA-ToA offset, noisy ToA+ToA offset].

As an implementation, after determining the first reference device, a first time threshold (such as a first ToAinterval) can be determined; and it may be further determined that a time threshold that a time difference between the time-related information of the first user equipment included in the first indication information and time-related information of the first reference device needs to meet, is equal to the first time threshold.

As an implementation, after determining the first reference device, a second direction can be determined, and it may be further determined that an angle range that the angle-related information of the first user equipment included in the first indication information needs to meet, is equal to an angle corresponding to the second direction. For example, the second direction is a direction of the first reference device relative to the TRP, or the second direction is [second direction 1, second direction 2] which can be expressed in degrees, obtained by adding an offset to the direction of the first reference device relative to the TRP.

Optionally, the determining, by the network device, the first reference device according to the reference location-related information and the actual location-related information, includes:
calculating, by the network device, an error between the reference location-related information and the actual location-related information;
determining, by the network device, the first reference device according to the error and an error threshold.

That is, after receiving the reference location-related information and the actual location-related information of the second reference device, the network device can determine the first reference device by calculating an error between the two and based on whether the error meets the error threshold. Here, the error meets the error threshold, which means that the error is less than or equal to the error threshold. The error threshold can be pre-configured or determined by the network device.

Optionally, the determining, by the network device, the first reference device according to the reference location-related information and the actual location-related information, includes:
sending, by the network device, an error threshold, where the error threshold is used to determine the first reference device;
determining, by the network device, a second reference device that sends the reference location-related information and the actual location-related information, as the first reference device; where an error between the reference location-related information and the actual location-related information of the first reference device meets the error threshold.

Here, the network device sends the error threshold through SIB or dedicated signaling, and the error threshold can be pre-configured or determined by the network device. The second reference device that receives the error threshold can determine, based on an error between reference location-related information and actual location-related information of the second reference device itself as well as the error threshold, whether the second reference device itself can serve as the first reference device according to whether the error meets the error threshold. If and only if the second reference device that receives the error threshold can serve as the first reference device (that is, the error meets the error threshold, for example, the error is less than or equal to the error threshold), the second reference device that receives the error threshold sends its own reference location-related information and actual location-related information to the network device. At this point, the reference location-related information and actual location-related information received by the network device come from the first reference device.

Of course, in this embodiment, the error between the reference location-related information and the actual location-related information of the second reference device can also be reflected by accuracy, which will not be elaborated here.

In addition, in this embodiment, the second reference device that receives the error threshold sends its own actual location-related information to the network device when the second reference device that receives the error threshold determines that it is not the first reference device, that is, the error does not meet the error threshold, such as when the error is greater than the error threshold. Optionally, the method further includes:
receiving, by the network device, actual location-related information sent by a third reference device; where the third reference device sends the actual location-related information when the third reference device receives the error threshold and determines that an error between reference location-related information and actual location-related information of the third reference device does not meet the error threshold.

That is, the second reference device whose error does not meet the error threshold, can be used as the third reference device to send its own actual location-related information to the network device.

Optionally, the first information and/or first signal received by the network device is sent by the first user equipment when the first indication information is received and the location-related information of the first user equipment meets the first indication information.

Optionally, the first indication information further includes: location-related information of the first reference device.

Here, the location-related information of the first reference device (which may be actual location-related information or reference location-related information) includes: (actual or calculated) location information of the first reference device; (actual or calculated) time-related information of the first reference device, such as a (actual or calculated) relative time difference between the first reference device receiving the DL-PRS and the DL-PRS sending device sending the DL-PRS; (actual or calculated) angle-related information of the first reference device, such as (actual or calculated) angle at which the first reference device receives the DL-PRS sent by the DL-PRS sending device.

As an implementation, the first indication information includes that the range information that the location-related information of the first user equipment needs to meet is a first range, for example, a first longitude range is [longitude 1, longitude 2] and a first latitude range is [latitude 1, latitude 2]. Then, the user equipment that receives the first indication information, determines whether its reference location-related information such as location information (calculated location information) is within the first range; if within the first range, the user equipment that receives the first indication information is determined to be the first user equipment, and can send the calculated location information to the network device subsequently.

As an implementation, the first indication information includes (actual or calculated) location information of the first reference device, and the distance threshold that the distance between the location of the first user equipment and the location of the first reference device needs to meet is equal to the first distance. Then, the user equipment that receives the first indication information, determines whether a distance between its reference location-related information such as location information (calculated location information) and the first reference device meets the first distance (such as whether being less than or equal to the first distance); if meeting the first distance, the user equipment that receives the first indication information is determined to be the first user equipment, and can send the calculated location information to the network device subsequently.

As an implementation, the first indication information includes (actual or calculated) location information of the first reference device, a distance threshold that a distance between the location of the first user equipment and the location of the first reference device needs to meet is equal to the first distance, and an angle range that an angle at which the first user equipment receives the DL-PRS sent by the DL-PRS sending device needs to meet is [angle 1, angle 2]. Then, the user equipment that receives the first indication information determines whether a distance between its reference location-related information such as location information (calculated location information) and the first reference device meets the first distance (such as whether being less than or equal to the first distance), and whether the angle of receiving the DL-PRS sent by the DL-PRS sending device meets the angle range [angle 1, angle 2]; if both are met, the user equipment that receives the first indication information is determined to be the first user equipment, and can send the calculated location information to the network device subsequently.

As an implementation, the first indication information includes that a ToA range that a calculated ToA of the first user equipment needs to meet, is equal to a first ToA range. For example, if the first ToA range is [noisy ToA-ToA offset, noisy ToA+ToA offset], then one user equipment that receives the first indication information, determines whether its calculated ToA meets the first ToA range; if it is met, then this user equipment is the first terminal device and can subsequently send the calculated ToA to the network device.

As an implementation, the first indication information includes a (actual or calculated) direction (second direction) of a first reference device relative to TRP, and the ToA range that the calculated ToA of the first user equipment needs to meet is equal to the first ToA range. Then, one user equipment that receives the first indication information, determines whether its reference location-related information such as ToA (calculated ToA) meets the first ToA range, and whether a direction relative to the TRP meets the second direction; if both are met, this user equipment that receives the first indication information is determined to be the first user equipment, and can send the calculated ToA to the network device subsequently.

As an implementation, the first indication information includes ToA (actual ToA or calculated ToA) of the first reference device, a (actual or calculated) direction (second direction) of the first reference device relative to the TRP, and a first ToA interval that a time difference between a calculated ToA of the first user equipment and a calculated ToA of the first reference device needs to meet. Then, one user equipment that receives the first indication information, determines whether its direction relative to the TRP meets the second direction, and whether a time difference between its calculated ToA and the calculated ToA of the first reference device meets the first ToA interval; if both of them are met, this user equipment that receives the first indication information is determined to be the first user equipment, and can send the calculated location information to the network device subsequently.

Optionally, a time when the reference location-related information of the second reference device is determined, and a time when the actual location-related information of the second reference device is determined, both meet a first validity time; and/or
a time difference between a time when the reference location-related information of the second reference device is determined and a time when the actual location-related information of the second reference device is determined, meets a time threshold.

In this way, it is ensured that the first indication information determined based on the reference location-related information and the actual location-related information of the second reference device can be used to determine the required first user equipment.

Both of the time when the reference location-related information of the second reference device is determined and the time when the actual location-related information of the second reference device is determined meeting the first validity time, can also be understood that: the time when the reference location-related information of the second reference device is determined and the time when the actual location-related information of the second reference device is determined are both within the first validity time.

Optionally, the method further includes:
determining, by the network device, the first validity time and/or the time threshold.

Correspondingly, the network device sends the first validity time and/or the time threshold, such as through SIB or dedicated signaling.

Of course, the first validity time and/or the time threshold may also be preset.

The following describes application of the embodiments of the present disclosure in combination with specific scenarios:

### Scenario 1: UE-based positioning

Step 1: a network device (such as LMF) sends first indication information, where the first indication information is used to determine a first user equipment (UE).

There are following three modes for determining the first UE:
Mode 1: the network device determines a first reference device, i.e., a target reference device, based on reference location-related information (such as calculated position information) and actual location-related information (such as actual coordinate position information) of a second reference device (such as a PRU with known actual coordinate position, a UE with known satellite positioning position). At this point, the performance of a position calculated or estimated by the target reference device is better and is less affected by nearby obstacles. The network device determines first indication information based on the first reference device. One user equipment that receives the first indication information determines whether to send first information and/or first signal based on the first indication information, which can also be understood as determining whether it is the first user equipment based on the first indication information.

The determining the first reference device, includes:
1) based on reference location-related information (e.g., calculated location information) and actual location-related information (e.g., actual coordinate location information) of second reference devices (e.g., PRUs with known actual coordinate positions, UEs with satellite-positioned locations), the network device selects a second reference device whose error between the reference location-related information and the actual location-related information meets an error threshold (configured or pre-configured, also referred to as a location error threshold) as the first reference device. Here, the second reference device sends its own reference location-related information and actual location-related information to the network device.
2) the second reference device (e.g., PRUs with known actual coordinate positions, UEs with satellite positioning locations), based on its own reference location-related information (e.g., calculated location information) and actual location-related information (e.g., actual coordinate location information), determine itself as a first reference device when an error between the reference location-related information and actual location-related information meets an error threshold (configured or pre-configured, also referred to as a location error threshold). The reference location-related information and actual location-related information that the network device can receive are sent by the first reference device. Of course, one second reference device whose error does not meet the error threshold may only send its actual location-related information to the network device.

The first indication information includes a location range that the location information of the first user equipment needs to meet. A first range can be determined based on a location (actual coordinate position or calculated position) of the first reference device and a preconfigured threshold, and the first indication information is further determined to include the first range. For example, the first range includes a first longitude range and a first latitude range, the first longitude range is [longitude 1, longitude 2], and the first latitude range is [latitude 1, latitude 2].

The user equipment that receives the first indication information determines whether to send the first information and/or the first signal based on the first indication information. It may be that after one user equipment (such as UE1) that receives the first indication information receives the above first range configured through SIB or dedicated signaling, when a calculated position of the UE1 meets the first range, such as a calculated position l of the UE1 is within the first longitude range of [longitude 1, longitude 2] and the first latitude range of [latitude 1, latitude 2], then the UE1 is the first user equipment.

Mode 2: the network device directly configures the first indication information; one user equipment that receives the first indication information determines whether to send first information and/or first signal based on the first indication information, which can also be understood as determining whether it is the first user equipment based on the first indication information.

Here, the network device configures the first indication information to include location quality information (such as a location quality threshold) that the location information (calculated location information) of the first user equipment needs to meet. The user equipment that receives the first indication information determining whether to send the first information and/or the first signal based on the first indication information, may be that after one user equipment (such as UE2) that receives the first indication information receives the above location quality threshold configured through SIB or dedicated signaling, when location quality information of a calculated location of the UE2 meets the location quality threshold, then the UE2 is the first user equipment.

Mode 3: regardless of how the first indication information is determined, for one user equipment that receives the first indication information or one user equipment that does not receive the first indication information, if the user equipment is a PRU or a user equipment with known actual location-related information (such as a UE with a known satellite positioning location), the mobile UE can serve as the first user equipment.

Step 2: the network device receives the first information and/or the first signal sent by the first user equipment.

If the first signal is received, the network device needs to further determine the first information according to the first signal.

Step 3: the network device performs at least one of training, performance monitoring and updating of the AI model based on the first information.

### Scenario 2: UE-assisted/LMF-based positioning (in this scenario, taking the location-related information being ToA of the location-related information as an example for illustration; of course, the same applies to the angle-related information and the path indication information)

Step 1: a network device (such as LMF) sends first indication information, where the first indication information is used to determine a first UE.

There are following three modes for determining the first UE:
Mode 1: the network device determines a first reference device, i.e., a target reference device, based on reference location-related information (such as calculated ToA) and actual location-related information (such as actual ToA) of a second reference device (such as a PRU with known actual coordinates, a UE with known satellite positioning position). At this point, performance of a position calculated or estimated by the target reference device is better and is less affected by nearby obstacles. The network device determines first indication information based on the first reference device. One user equipment that receives the first indication information determines whether to send the first information and/or the first signal based on the first indication information, which can also be understood as determining whether it serves as the first user equipment based on the first indication information.

The determining the first reference device, includes:
1) based on reference location-related information (such as calculated ToA) and actual location-related information (such as actual ToA) of second reference devices (such as PRUs with known actual coordinates, UEs with known satellite positioning position), the network device selects a second reference device whose error between the reference location-related information and the actual location-related information meets an error threshold (configured or preset, also called time error threshold) as the first reference device. Here, the second reference device sends its own reference location-related information and actual location-related information to the network device.
2) the second reference device (such as a PRU with known actual coordinates, a UE with known satellite positioning), based on its own reference time-related information (e.g., calculated ToA) and actual time-related information (e.g., actual ToA), determines itself as the first reference device when an error between the reference time-related information and the actual time-related information meets an error threshold (configured or pre-configured, also referred to as a time error threshold). The reference location-related information and actual location-related information that can be received by the network device are sent by the first reference device. Of course, one second reference device whose error does not meet the error threshold can only send its actual location-related information to the network device.

The first indication information includes a time range that the time-related information of the first user equipment needs to meet. A first ToA range can be determined based on ToA of the first reference device (actual ToA or calculated ToA) and a preconfigured threshold (such as a preused toA offset). The first indication information is further determined to include the first ToA range. For example, for a certain TRP, a calculated ToA from a target reference device to the TRP is recorded as noisy ToA, then the first ToA range is [noisy ToA-ToA offset, noisy ToA+ToA offset].

The user equipment that receives the first indication information determining whether to send the first information and/or the first signal based on the first indication information, may be that after one user equipment (such as UE1) that receives the first indication information receives the above first ToA range configured through SIB or dedicated signaling, when the calculated ToA of UE1 meets the first ToA range, such as the calculated ToA of UE1 is within the first ToA range of [noisy ToA-ToA offset, noisy ToA+ToA offset], then UE1 serves as the first user equipment.

Mode 2: the network device directly configures the first indication information; one user equipment that receives the first indication information determines whether to send the first information and/or the first signal based on the first indication information, which can also be understood as determining whether it serves as the first user equipment based on the first indication information.

Here, the network device configures the first indication information to include time quality information (such as ToA quality threshold) that the time-related information (calculated ToA) of the first user equipment needs to meet. One user equipment that receives the first indication information determining whether to send the first information and/or the first signal based on the first indication information, may be that after one user equipment (such as UE2) that receives the first indication information receives the above ToA quality threshold configured through SIB or dedicated signaling, when the ToA quality information of the calculated ToA of the UE2 meets the ToA quality threshold, then the UE2 serves as the first user equipment.

Mode 3: regardless of how the first indication information is determined, for one user equipment that receives the first indication information or one user equipment that does not receive the first indication information, if the user equipment is a PRU or a user equipment with known actual location-related information (such as a UE with a known satellite positioning location), the mobile user equipment can serve as the first user equipment.

Step 2: the network device receives the first information and/or the first signal sent by the first user equipment.

If the first signal is received, the network device needs to further determine the first information according to the first signal.

Step 3: the network device performs at least one of training, performance monitoring and updating of the AI model based on the first information.

Scenario 3: based on NG-RAN node assisted positioning, TRP/gNB side determines an intermediate measurement quantity (time-related information, angle-related information, path indication information, etc.) used to estimate a location of a UE, and LMF side estimates the location of the UE based on the intermediate measurement quantity (in this scenario, taking the location-related information being ToA of the time-related information as an example for illustration; of course, the same applies to the angle-related information and path indication information).

Step 1: a network device (such as a gNB) sends first indication information, where the first indication information is used to determine a first UE.

There are following three modes for determining the first UE:
Mode 1: the network device determines a first reference device, i.e., a target reference device, based on reference location-related information (such as calculated ToA) and actual location-related information (such as actual ToA) of a second reference device (such as a PRU with known actual coordinates, a UE with known satellite positioning position). At this point, performance of a position calculated or estimated by the target reference device is better and is less affected by nearby obstacles. The network device determines first indication information based on the first reference device. One user equipment that receives the first indication information determines whether to send first information and/or first signal based on the first indication information, which can also be understood as determining whether it serves as the first user equipment based on the first indication information.

The determining the first reference device, includes:
1) based on reference location-related information (e.g., calculated ToA) and actual location-related information (e.g., actual ToA) of second reference devices (e.g., PRUs with known actual coordinate positions, UEs with satellite-positioned locations), the network device selects a second reference device whose error between the reference location-related information and the actual location-related information meets an error threshold (configured or pre-configured, also referred to as a time error threshold). Here, the second reference device sends its own reference location-related information and actual location-related information to the network device.
2) the second reference device (such as a PRU with known actual coordinates, a UE with known satellite positioning), based on its own reference location-related information (such as calculated ToA) and actual location-related information (such as actual ToA), determines to be the first reference device when an error between the reference location-related information and the actual location-related information meets an error threshold (configured or preset, also called time error threshold). The reference location-related information and actual location-related information that can be received by the network device are sent by the first reference device. Of course, one second reference device whose error does not meet the error threshold can only send its actual location-related information to the network device.

The first indication information includes a time range that the time-related information of the first user equipment needs to meet. A first ToA range can be determined based on ToA (actual ToA or calculated ToA) of the first reference device and a preconfigured threshold (such as a preused toA offset). The first indication information is further determined to include the first ToA range. For example, for a certain TRP, a calculated ToA from a target reference device to the TRP is recorded as noisy ToA, then the first ToA range is [noisy ToA-ToA offset, noisy ToA+ToA offset].

The user equipment that receives the first indication information determining whether to send the first information and/or the first signal based on the first indication information, may be that after one user equipment (such as UE1) that receives the first indication information receives the above first ToA range configured through SIB or dedicated signaling, when a calculated ToA corresponding to UE1 (such as ToA estimated by TRP through the UL-SRS sent by UE1) meets the first ToArange, such as the calculated ToA corresponding to UE1 is within the first ToA range of [noisy ToA-ToA offset, noisy ToA+ToA offset], then the UE1 serves as the first user equipment.

Mode 2: the network device directly configures the first indication information; one user equipment that receives the first indication information determines whether to send the first information and/or the first signal based on the first indication information, which can also be understood as determining whether it serves as the first user equipment based on the first indication information.

Here, the network device configures the first indication information to include time quality information (such as ToA quality threshold) that the time-related information (calculated ToA) of the first user equipment needs to meet. One user equipment that receives the first indication information determining whether to send the first information and/or the first signal based on the first indication information, may be that after one user equipment (such as UE2) that receives the first indication information receives the above ToA quality threshold configured through SIB or dedicated signaling, when the ToA quality information of the calculated ToA corresponding to UE2 (such as ToA estimated by TRP through the UL-SRS sent by UE1) meets the ToA quality threshold, then the UE2 is the first user equipment.

Mode 3: regardless of how the first indication information is determined, for one user equipment that receives the first indication information or one user equipment that does not receive the first indication information, if the user equipment is a PRU or a user equipment with known actual location-related information (such as a UE with a known satellite positioning location), the mobile user equipment can serve as the first user equipment.

Step 2: the network device receives the first information and/or the first signal sent by the first user equipment.

If the first signal is received, the network device needs to further determine the first information according to the first signal.

Step 3: the network device performs at least one of training, performance monitoring and updating of the AI model based on the first information.

In summary, in the present disclosure, the first indication information is used to filter out the first user equipment for providing the first information for at least one of training, performance monitoring and updating of the first model, thereby avoiding the problem that in a case of a small number of PRUs, the data provided by the small number of PRUs cannot meet the demand.

As shown in FIG. 2, a data processing method according to an embodiment of the present disclosure, includes:
Step 201: receiving, by a second user equipment, first indication information, where the first indication information is used to determine a first user equipment to obtain first information of the first user equipment.

The first information is used for one or more of the following:
training of a first model; performance monitoring of the first model; updating of the first model.

The first model is used to determine location-related information of the user equipment.

In this way, the second user equipment can receive the first indication information, and the first indication information is used to determine the first user equipment, so as to achieve the purpose that the network device obtains the first information of the first user equipment. Therefore, the first information can be used for at least one of the training, performance monitoring and updating of the first model, thereby avoiding the problem that in a case of a small number of PRUs, the data provided by the small number of PRUs cannot meet the demand.

Optionally, after the second user equipment receives the first indication information, the method further includes:
sending, by the second user equipment, first information and/or first signal;
where the first signal is used to determine the first information.

Optionally, the sending, by the second user equipment, the first information and/or the first signal, includes:
when the second user equipment receives the first indication information and determines that its own location-related information meets the first indication information, sending, by the second user equipment, the first information and/or the first signal.

That is, after receiving the first indication information, the second user equipment will determine whether its own location-related information meets the first indication information based on the first indication information, which can also be understood as determining whether it is the first user equipment. Afterwards, if it is determined that its own location-related information meets the first indication information, the second user equipment sends the first information and/or the first signal.

In this embodiment, the location-related information of the second user equipment may also be referred to as reference location-related information of the second user equipment, i.e., calculated location-related information.

Optionally, the location-related information includes one or more of the following:
location information; time-related information; angle-related information; path indication information.

Optionally, the first information includes at least one of the following:
channel observation result; location-related information of the first user equipment.

Optionally, the first indication information includes one or more of the following:
range information that the location-related information of the first user equipment needs to meet;
quality information that the location-related information of the first user equipment needs to meet;
threshold information that needs to be met between the location-related information of the first user equipment and the location-related information of a first reference device, where the first reference device is a device used to determine the first user equipment.

Optionally, the range information that the location-related information of the first user equipment needs to meet, includes one or more of the following:
a location range that the location information of the first user equipment needs to meet;
a time range that the time-related information of the first user equipment needs to meet;
an angle range that the angle-related information of the first user equipment needs to meet.

Optionally, the quality information that the location-related information of the first user equipment needs to meet, includes:
location quality information that the location information of the first user equipment needs to meet;
time quality information that the time-related information of the first user equipment needs to meet;
angle quality information that the angle-related information of the first user equipment needs to meet;
path indication quality information that the path indication information of the first user equipment needs to meet.

Optionally, threshold information that needs to be met between the location-related information of the first user equipment and the location-related information of the first reference device, includes:
a distance threshold that a distance between a location of the first user equipment and a location of a first reference device needs to meet;
a time threshold that a time difference between the time-related information of the first user equipment and the time-related information of the first reference device needs to meet;
an angle threshold that an angle difference between the angle-related information of the first user equipment and the angle-related information of the first reference device needs to meet.

Optionally, the first indication information further includes:
location-related information of the first reference device.

It is to be noted that this method is implemented in conjunction with the data processing method performed by the network device as shown in FIG. 1. The implementation of the embodiment of the above method is applicable to this method and can achieve the same technical effect.

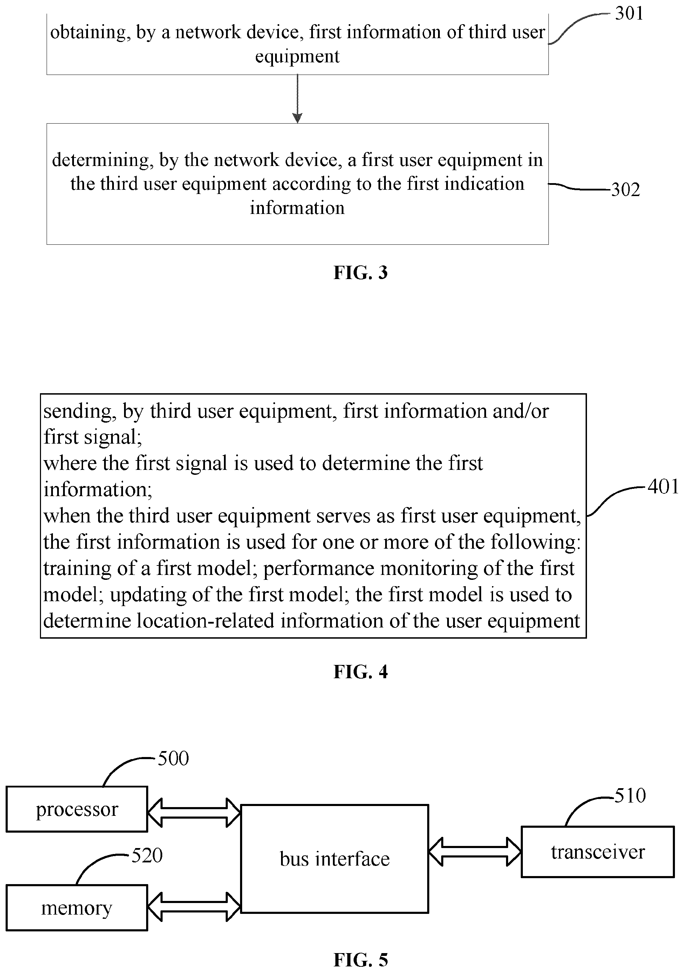

As shown in FIG. 3, a data processing method according to an embodiment of the present disclosure includes:
Step 301: obtaining, by a network device, first information of third user equipment;
Step 302: determining, by the network device, a first user equipment in the third user equipment according to the first indication information.

The first information of the first user equipment is used for one or more of the following:
training of the first model; performance monitoring of the first model; updating of the first model.

The first model is used to determine location-related information of the user equipment.

According to the above steps, when the network device obtains the first information of the third user equipment, the network device further determines the first user equipment from the third the network device according to the first indication information. In this way, the first information of the first user equipment can be obtained from the first information of the third user equipment, which is used for at least one of the training, performance monitoring and updating of the first model, thereby avoiding the problem that in a case of a small number of PRUs, the data provided by the small number of PRUs cannot meet the demand.

In this embodiment, the first model may be an AI/ML model for determining location-related information of the user equipment.

In this embodiment, the network device may be a next generation NodeB (gNB), a transmission reception point (TRP), a location management function (LMF) network element, a data collection device, etc.

Optionally, the obtaining, by network device, the first information of the third user equipment, includes:
receiving, by network device, the first information sent by the third user equipment.

Optionally, the obtaining, by network device, the first information of the third user equipment, includes:
receiving, by network device, a first signal sent by the third user equipment;
determining, by network device, first information according to the first signal.

That is, the third user equipment will send a first signal to the network device; and after the network device receives the first signal, the network device needs to further determine the first information based on the first signal.

Here, the first signal may be a UL-SRS or other uplink signals, and this embodiment does not specifically limit the form of the first signal.

On the one hand, in the embodiment of the present disclosure, the network device performs training of the first model, performance monitoring of the first model, updating of the first model and other processing on the first model. Therefore, optionally, the method further includes:
performing, by the network device, one or more of the following according to the first information of the first user equipment:
training of the first model; performance monitoring of the first model; and updating of the first model.

On the other hand, in the embodiment of the present disclosure, the network device does not perform training of the first model, performance monitoring of the first model, updating of the first model and other processing for the above first model. Therefore, after the network device obtains the first information, the network device sends the first information to a device that performs training of the first model, performance monitoring of the first model, updating of the first model and other processing.

For example, for UE-based positioning, the training of the AI model can be completed on the UE side or on the network side. When the training of the AI model is completed on the UE side, the network device (such as LMF) obtains the first information and sends the first information to the UE side for training. When the training of the AI model is completed on the network side, the network device obtains the first information and trains the AI model. Of course, the network device that obtains the first information, may be a data collection device or a device with a data collection function, and may send, after obtaining the first information, the collected first information to the LMF for AI model training.

In addition, for UE-assisted/LMF-based positioning, the training of the AI model can be completed on the UE side or on the network side, and the network device can be the LMF. For NG-RAN node assisted positioning, the training of the AI model can be completed at a transmission-reception point (TRP) or gNB side or the LMF side. Before the training of the first model, the performance monitoring of the first model, the updating of the first model, etc. are performed on any device such as UE, TRP, gNB, LMF, etc., if the network device and the device that performs the training of the first model, the performance monitoring of the first model, and the updating of the first model are different, then, after the network device obtains the first information, the network device will send the collected first information to the device that performs the training of the first model, the performance monitoring of the first model, and the updating of the first model.

Optionally, the first information of the third user equipment includes at least one of the following:
channel observation result; location-related information of the third user equipment.

Optionally, the first information of the first user equipment includes at least one of the following:
channel observation result; location-related information of the first user equipment.

As an implementation, the channel observation result includes one or more of: channel impulse response (CIR); channel frequency response (CFR); reference signal received power (RSRP); time-related information, such as time of arriva (ToA), reference signal time difference (RSTD), relative time of arrival (RTOA); angle-related information, such as angle of arrival (AoA), angle of departure (AoD); reference signal received path power (RSRPP).

In this embodiment, the location-related information of the first user equipment may also be referred to as reference location-related information of the first user equipment.

It is to be noted that, in this embodiment, the reference location-related information is calculated location-related information.

The location-related information of the third user equipment may also be referred to as reference location-related information of the third user equipment, i.e., calculated location-related information.

Optionally, in this embodiment, the location-related information includes one or more of the following:
location information; time-related information; angle-related information; path indication information.

In this embodiment, the location information (which is location information included in the reference location-related information) is obtained by measuring downlink-positioning reference signal (DL-PRS) or UL-SRS and calculating based on a preset positioning method. The preset positioning method can be a trilateration-based positioning, where a device's position is calculated by applying a position of the TRP and time-related information (such as ToA, RSTD, etc.) between the user equipment and the TRP to a corresponding formula. The preset positioning method may also be a positioning method related to a radio access technology (RAT), which will not be repeated here.

In this embodiment, the time-related information, the angle-related information, and the path indication information are all information that can be used to calculate the location information. The path indication information may be a line of sight (LOS) or non-line of sight (NLOS) indication, and the LOS/NLOS indication may be a type of LOS/NLOS or a probability corresponding to LOS/NLOS.

Optionally, the first indication information includes one or more of the following:
range information that the location-related information of the first user equipment needs to meet;
quality information that the location-related information of the first user equipment needs to meet;
threshold information that needs to be met between the location-related information of the first user equipment and the location-related information of a first reference device, where the first reference device is a device used to determine the first user equipment.

Optionally, the range information that the location-related information of the first user equipment needs to meet, includes one or more of the following:
a location range that the location information of the first user equipment needs to meet;
a time range that the time-related information of the first user equipment needs to meet;
an angle range that the angle-related information of the first user equipment needs to meet.

That is, the first indication information includes different range information for different contents of the location-related information.

As an implementation, the location range may be a location range defined by longitude and latitude, or a location range defined by administrative regions, and so on.

As an implementation, if the time-related information of the first user equipment is a first relative time difference between a moment when the first user equipment sends UL-SRS and a moment when an UL-SRS receiving device receives UL-SRS, then, the time range is a range of the first relative time difference. If the time-related information of the first user equipment is a second relative time difference between a moment when a DL-PRS sending device sends DL-PRS and a moment when the first user equipment receives DL-PRS, then the time range is a range of the second relative time difference. Here, the UL-SRS receiving device may be a TRP or a gNB, and the DL-PRS sending device may also be a TRP or a gNB.

As an implementation, if the angle-related information of the first user equipment is a first angle (such as AoD) at which the DL-PRS sending device sends DL-PRS, determined by the first user equipment, then the angle range is a range of the first angle. If the angle-related information of the first user equipment is a second angle at which the first user equipment receives the DL-PRS sent by the DL-PRS sending device, then the angle range is a range of the second angle. If the angle-related information of the first user equipment is a third angle at which the UL-SRS receiving device receives the UL-SRS sent by the first user equipment, then the angle range is a range of the third angle. If the angle-related information of the first user equipment is a fourth angle at which the first user equipment sends UL-SRS, determined by the UL-SRS receiving device, then the angle range is a range of the fourth angle. Here, the UL-SRS receiving device may be a TRP or a gNB, and the DL-PRS sending device may also be a TRP or a gNB.

It is to be noted that, in this embodiment, the angle can also be described using a direction. For example, the first angle can represent a first direction. The first direction can be a range of directions, such as the first direction is [first direction 1, second direction 2], which can be expressed in degrees.

Optionally, the quality information that the location-related information of the first user equipment needs to meet, includes:
location quality information that the location information of the first user equipment needs to meet;
time quality information that the time-related information of the first user equipment needs to meet;
angle quality information that the angle-related information of the first user equipment needs to meet;
path indication quality information that the path indication information of the first user equipment needs to meet.

That is, the first indication information includes different quality information for different contents of the location-related information. In this embodiment, the quality information may represent the credibility, accuracy, error, etc. of the corresponding information.

Optionally, threshold information that needs to be met between the location-related information of the first user equipment and the location-related information of the first reference device, includes:
a distance threshold that a distance between a location of the first user equipment and a location of a first reference device needs to meet;
a time threshold that a time difference between the time-related information of the first user equipment and the time-related information of the first reference device needs to meet;
an angle threshold that an angle difference between the angle-related information of the first user equipment and the angle-related information of the first reference device needs to meet.

As an implementation, the distance threshold that the distance between the location of the first user equipment and the location of the first reference device needs to meet may be a specific value, and then, one user equipment may qualify as the first user equipment if a distance between a location of the one user equipment and a location of the first reference device meets the specific value (i.e., is less than or equal to the specific value). Of course, the distance threshold may also be a specific value range.

As an implementation, the time-related information of the first user equipment/first reference device may be the relative time difference between a moment when the first user equipment/first reference device sends UL-SRS and a moment when the UL-SRS receiving device receives UL-SRS, or the relative time difference between a moment when the DL-PRS sending device sends DL-PRS and a moment when the first user equipment/first reference device receives DL-PRS. Thus, taking the case where the time-related information of the first user equipment is the relative time difference between the moment when the first user equipment sends UL-SRS and the moment when the UL-SRS receiving device receives UL-SRS (i.e., the first relative time difference of the first user equipment), and the time-related information of the first reference device is the relative time difference between a moment when the first reference device sends UL-SRS and a moment when the UL-SRS receiving device receives UL-SRS (i.e., the first relative time difference of the first reference device), as an example, the time threshold is a time threshold that a time difference between the first relative time difference of the first user equipment and the second relative time difference of the second user equipment needs to meet.

As an implementation, the angle-related information of the first user equipment/first reference device may be an angle (such as AoD) at which the DL-PRS sending device sends the DL-PRS, determined by the first user equipment/first reference device, or an angle at which the first user equipment/first reference device receives the DL-PRS sent by the DL-PRS sending device, or an angle at which the UL-SRS receiving device receives the UL-SRS sent by the first user equipment/first reference device, or an angle at which the first user equipment/first reference device sends the UL-SRS, determined by the UL-SRS receiving device. In this way, taking a case where the angle-related information of the first user equipment is an angle (i.e., the first angle) at which the DL-PRS sending device sends the DL-PRS, determined by the first user equipment, and the angle-related information of the first reference device is an angle (i.e., the second angle) at which the DL-PRS sending device sends the DL-PRS, determined by the first reference device, as an example, the angle threshold is a time threshold that an angle difference between the first angle and the second angle needs to meet.

Of course, the above detailed description of the time-related information of the first user equipment/first reference device and the angle-related information of the first user equipment/first reference device is also applicable to other user equipment/reference devices.

Optionally, the method further includes:
determining, by the network device, reference location-related information and actual location-related information of a second reference device;
determining, by the network device, the first indication information according to the reference location-related information and the actual location-related information.

That is, the network device further determines the first indication information by determining the reference location-related information and the actual location-related information of the second reference device.

In this embodiment, the actual location-related information can also be understood as real location-related information, which is accurate location-related information. The reference location-related information can be understood as calculated and estimated location-related information, for example, a location included in the reference location-related information is a location calculated according to the RAT positioning method and has a certain error with the actual location and is not accurate.

Optionally, the second reference device includes one or more of the following:
positioning reference unit (PRU); a user equipment that is aware of actual location-related information.

Here, the PRU is aware of its own actual location-related information; and the user equipment that is aware of actual location-related information may be a user equipment with satellite positioning capability, or may be a user equipment with other high-precision positioning capabilities.

When the second reference device is a PRU, for UE-based positioning, the PRU can measure the DL-PRS sent by the TRP to obtain a channel observation result, and then solve location information of the corresponding PRU according to the channel observation result through a preset positioning method. The location information is calculated or estimated location information; that is, the location information included in the reference location-related information, can be referred as reference location information. At this point, the reference location information and actual location information corresponding to the PRU (the location information included in the actual location-related information, such as actual coordinate position) can be known. Here, the calculation or estimation method of reference location information is a non-AI-based position determination method, i.e., a method that calculates the position through a trilateration algorithm using the position of TRP and measurement quantities obtained by measuring reference signals. This calculation or estimation method of reference location information applies to all embodiments in the specification. Additionally, for downlink positioning techniques, such as NR DL-TDOA, the UE can obtain RSTD by measuring DL-PRS, and the UE's position can be calculated via a trilateration algorithm based on positions of multiple TRPs and corresponding multiple RSTDs.

When the second reference device is a UE with known actual location-related information, for UE-based positioning, the UE can measure a DL-PRS sent by the TRP to obtain a channel observation result, and then calculate corresponding location information of the UE based on the channel observation result through a preset positioning method. The location information is calculated or estimated location information, that is, the location information included in the reference location-related information can be called reference location information. At this point, the UE can obtain satellite positioning location information through a global satellite positioning system such as global positioning system (GPS) or global navigation satellite system (GNSS) or Beidou, that is, the location information included in the actual location-related information can be called actual location information. There is no limitation on other methods for determining the actual location information.

When the second reference device is a PRU, for UE-assisted/LMF-based positioning, the PRU can measure the DL-PRS sent by the TRP to obtain a channel observation result (which can be CIR, CFR, RSRP, etc.), and then estimate time-related information, angle-related information, path indication information, etc. based on the channel observation result through a preset positioning method. That is, the time-related information, angle-related information, and path indication information included in the reference location-related information can be called reference time-related information, reference angle-related information, and reference path indication information. At this point, the actual location-related information of the PRU can include the time-related information, angle-related information, and path indication information, which can be determined according to the actual location information of the PRU and the location of the TRP, and which can be called actual time-related information, actual angle-related information, and actual path indication information.

When the second reference device is a UE aware of actual location-related information, for UE-assisted/LMF-based positioning, the UE can measure the DL-PRS sent by the TRP to obtain a channel observation result (which can be CIR, CFR, RSRP, etc.), and then estimate time-related information, angle-related information, path indication information, etc. based on the channel observation result through a preset positioning method. That is, the time-related information, angle-related information, and path indication information included as reference location-related information can be called reference time-related information, reference angle-related information, and reference path indication information. At this point, the UE can obtain satellite positioning position information through a global satellite positioning system such as GPS or GNSS or Beidou, that is, the position information included as actual location-related information can be called actual position information, so that the time-related information, angle-related information, and path indication information determined according to the actual position information and the TRP position can be called actual time-related information, actual angle-related information, and actual path indication information.

When the second reference device is a PRU, for NG-RAN node assisted positioning, the TRP can measure UL-PRS sent by the PRU to obtain a channel observation result (which can be CIR, CFR, RSRP, etc.), and then estimate time-related information, angle-related information, path indication information, etc. based on the channel observation result through a preset positioning method. That is, the time-related information, angle-related information, and path indication information included as the reference location-related information can be called reference time-related information, reference angle-related information, and reference path indication information. At this point, the actual location-related information of the PRU can include the time-related information, angle-related information, and path indication information determined according to the actual position information of the PRU and the position of the TRP, which can be called actual time-related information, actual angle-related information, and actual path indication information.

When the second reference device is a UE of aware actual location-related information, for NG-RAN node assisted positioning, TRP can measure UL-PRS sent by the UE to obtain a channel observation result (which can be CIR, CFR, RSRP, etc.), and then estimate time-related information, angle-related information, path indication information, etc. based on the channel observation result through a preset positioning method. That is, the time-related information, angle-related information, and path indication information included as reference location-related information can be called reference time-related information, reference angle-related information, and reference path indication information. At this point, the UE can obtain satellite positioning location information through a global satellite positioning system such as GPS or GNSS or Beidou, that is, the location information included as actual location-related information can be called actual location information, so that the time-related information, angle-related information, and path indication information determined based on the actual location information and the TRP position can be called actual time-related information, actual angle-related information, and actual path indication information.

Optionally, the method further includes:
receiving, by the network device, one or more of the following sent by the second reference device:
reference location-related information of the second reference device; actual location-related information of the second reference device; and an obtaining method of the actual location-related information.

Here, after receiving the above one or more items sent by the second reference device, the network device can determine applicable reference location-related information and actual location-related information to determine the first indication information. For example, based on the obtaining method, the actual location-related information with higher accuracy is selected to determine the first indication information.

Optionally, the determining, by the network device, the first indication information according to the reference location-related information and the actual location-related information, includes:
determining, by the network device, a first reference device according to the reference location-related information and the actual location-related information;
determining, by the network device, the first indication information according to the first reference device.

As an implementation, after determining the first reference device, a first range can be determined based on a position (actual coordinate position or calculated position) of the first reference device and a preconfigured threshold; and it may be further determined that a position range that the position information of the first user equipment included in the first indication information needs to meet is the first range. Here, the preconfigured threshold can be a preconfigured distance, and the first range is determined based on the preconfigured distance with the position of the first reference device as a center. The first range can be expressed as a range in longitude and latitude. For example, the first range includes a first longitude range and a first latitude range, the first longitude range is [longitude 1, longitude 2], and the first latitude range is [latitude 1, latitude 2].

As an implementation, after determining the first reference device, a first distance may be determined, and it may be further determined that a distance threshold that a distance between the position of the first user equipment included in the first indication information and the position of the first reference device needs to meet, is equal to the first distance.

As an implementation, after determining the first reference device, a first direction can be determined, and it may be further determined that an angular threshold that an angle difference between the angle-related information of the first user equipment included in the first indication information and the angular-related information of the first reference device needs to meet, is equal to an angle corresponding to the first direction.

As an implementation, after determining the first reference device, a time range (such as a first ToA range) can be determined based on ToA (actual ToA or calculated ToA) of the first reference device and a preconfigured threshold (such as a preused toA offset); and it may be further determined that the first indication information includes the first ToA range. For example, for a certain TRP, a calculated ToA from a target reference device to the TRP is recorded as noisy ToA, then the first ToA range is [noisy ToA-ToA offset, noisy ToA+ToA offset].

As an implementation, after determining the first reference device, a first time threshold (such as a first ToA interval) can be determined; and it may be further determined that a time threshold that a time difference between the time-related information of the first user equipment included in the first indication information and time-related information of the first reference device needs to meet, is equal to the first time threshold.

As an implementation, after determining the first reference device, a second direction can be determined, and it may be further determined that an angle range that the angle-related information of the first user equipment included in the first indication information needs to meet, is equal to an angle corresponding to the second direction. For example, the second direction is a direction of the first reference device relative to the TRP, or the second direction is [second direction 1, second direction 2] which can be expressed in degrees, obtained by adding an offset to the direction of the first reference device relative to the TRP.

Optionally, the determining, by the network device, the first reference device according to the reference location-related information and the actual location-related information, includes:
calculating, by the network device, an error between the reference location-related information and the actual location-related information;
determining, by the network device, the first reference device according to the error and an error threshold.

That is, after receiving the reference location-related information and the actual location-related information of the second reference device, the network device can determine the first reference device by calculating an error between the two and based on whether the error meets the error threshold. Here, the error meets the error threshold, which means that the error is less than or equal to the error threshold. The error threshold can be pre-configured or determined by the network device.

Optionally, the determining, by the network device, the first reference device according to the reference location-related information and the actual location-related information, includes:
sending, by the network device, an error threshold, where the error threshold is used to determine the first reference device;
determining, by the network device, a second reference device that sends the reference location-related information and the actual location-related information, as the first reference device; where an error between the reference location-related information and the actual location-related information of the first reference device meets the error threshold.

Here, the network device sends the error threshold through SIB or dedicated signaling, and the error threshold can be pre-configured or determined by the network device. The second reference device that receives the error threshold can determine, based on an error between reference location-related information and actual location-related information of the second reference device itself as well as the error threshold, whether the second reference device itself can serve as the first reference device according to whether the error meets the error threshold. If and only if the second reference device that receives the error threshold can serve as the first reference device (that is, the error meets the error threshold, for example, the error is less than or equal to the error threshold), the second reference device that receives the error threshold sends its own reference location-related information and actual location-related information to the network device. At this point, the reference location-related information and actual location-related information received by the network device come from the first reference device.

Of course, in this embodiment, the error between the reference location-related information and the actual location-related information of the second reference device can also be reflected by accuracy, which will not be elaborated here.

In addition, in this embodiment, the second reference device that receives the error threshold sends its own actual location-related information to the network device when the second reference device that receives the error threshold determines that it is not the first reference device, that is, the error does not meet the error threshold, such as when the error is greater than the error threshold. Optionally, the method further includes:
receiving, by the network device, actual location-related information sent by a third reference device; where the third reference device sends the actual location-related information when the third reference device receives the error threshold and determines that an error between reference location-related information and actual location-related information of the third reference device does not meet the error threshold.

That is, the second reference device whose error does not meet the error threshold, can be used as the third reference device to send its own actual location-related information to the network device.

Optionally, the first indication information further includes: location-related information of the first reference device.

Here, the location-related information of the first reference device (which may be actual location-related information or reference location-related information) includes: (actual or calculated) location information of the first reference device; (actual or calculated) time-related information of the first reference device, such as a (actual or calculated) relative time difference between the first reference device receiving the DL-PRS and the DL-PRS sending device sending the DL-PRS; (actual or calculated) angle-related information of the first reference device, such as (actual or calculated) angle at which the first reference device receives the DL-PRS sent by the DL-PRS sending device.

As an implementation, the first indication information includes that the range information that the location-related information of the first user equipment needs to meet is a first range, for example, a first longitude range is [longitude 1, longitude 2] and a first latitude range is [latitude 1, latitude 2]. Then, the network device determines whether the reference location-related information such as location information (calculated location information) of the third user equipment is within the first range; if within the first range, the network device determines the third user equipment to be the first user equipment.

As an implementation, the first indication information includes (actual or calculated) location information of the first reference device, and the distance threshold that the distance between the location of the first user equipment and the location of the first reference device needs to meet is equal to the first distance. Then, the network device determines whether a distance between the reference location-related information such as location information (calculated location information) of the third user equipment and the first reference device meets the first distance (such as whether being less than or equal to the first distance); if meeting the first distance, the network device determines the third user equipment to be the first user equipment.

As an implementation, the first indication information includes (actual or calculated) location information of the first reference device, a distance threshold that a distance between the location of the first user equipment and the location of the first reference device needs to meet is equal to the first distance, and an angle range that an angle at which the first user equipment receives the DL-PRS sent by the DL-PRS sending device needs to meet is [angle 1, angle 2]. Then, the network device determines whether a distance between the reference location-related information such as location information (calculated location information) of the third user equipment and the first reference device meets the first distance (such as whether being less than or equal to the first distance), and whether the angle of receiving the DL-PRS sent by the DL-PRS sending device meets the angle range [angle 1, angle 2]; if both are met, the network device determines the third user equipment to be the first user equipment.

As an implementation, the first indication information includes that a ToA range that a calculated ToA of the first user equipment needs to meet, is equal to a first ToA range. For example, if the first ToA range is [noisy ToA-ToA offset, noisy ToA+ToA offset], then the network device determines whether a calculated ToA of the third user equipment meets the first ToA range; if it is met, then the network device determines the third user equipment to be the first user equipment.

As an implementation, the first indication information includes a (actual or calculated) direction (second direction) of a first reference device relative to TRP, and the ToA range that the calculated ToA of the first user equipment needs to meet is equal to the first ToA range. Then, the network device determines whether the reference location-related information such as ToA (calculated ToA) of the third user equipment meets the first ToArange, and whether a direction relative to the TRP meets the second direction; if both are met, the network device determines the third user equipment to be the first user equipment.

As an implementation, the first indication information includes ToA (actual ToA or calculated ToA) of the first reference device, a (actual or calculated) direction (second direction) of the first reference device relative to the TRP, and a first ToA interval that a time difference between a calculated ToA of the first user equipment and a calculated ToA of the first reference device needs to meet. Then, the network device determines whether the direction relative to the TRP of the third user equipment meets the second direction, and whether a time difference between a calculated ToA and the calculated ToA of the first reference device meets the first ToA interval; if both of them are met, the network device determines the third user equipment to be the first user equipment.

Optionally, a time when the reference location-related information of the second reference device is determined, and a time when the actual location-related information of the second reference device is determined, both meet a first validity time; and/or
a time difference between a time when the reference location-related information of the second reference device is determined and a time when the actual location-related information of the second reference device is determined, meets a time threshold.

In this way, it is ensured that the first indication information determined based on the reference location-related information and the actual location-related information of the second reference device can be used to determine the required first user equipment.

Both of the time when the reference location-related information of the second reference device is determined and the time when the actual location-related information of the second reference device is determined meeting the first validity time, can also be understood that: the time when the reference location-related information of the second reference device is determined and the time when the actual location-related information of the second reference device is determined are both within the first validity time.

Optionally, the method further includes:
determining, by the network device, the first validity time and/or the time threshold.

Correspondingly, the network device sends the first validity time and/or the time threshold, such as through SIB or dedicated signaling.

Of course, the first validity time and/or the time threshold may also be preset.

The following describes application of the embodiments of the present disclosure in combination with specific scenarios:

### Scenario 1: UE-based positioning

Step 1: a network device (such as LMF) obtains first indication information of a third user equipment.

On the one hand, the network device directly receives the first information sent by the third user equipment; on the other hand, the network device receives first signal sent by the third user equipment, and then determines the first information according to the first signal.

Here, the third user equipment may be all user equipment communicating with the network device, thereby ensuring that a sufficient number of first user equipment are determined.

Step 2: the network device determines first user equipment in the third user equipment according to the first indication information.

There are following three modes for determining the first UE:
Mode 1: the network device determines a first reference device, i.e., a target reference device, based on reference location-related information (such as calculated position information) and actual location-related information (such as actual coordinate position information) of a second reference device (such as a PRU with known actual coordinate position, a UE with known satellite positioning position). At this point, the performance of a position calculated or estimated by the target reference device is better and is less affected by nearby obstacles. The network device determines first indication information based on the first reference device. The network device determines whether the third user equipment serves as the first user equipment based on the first indication information.

The determining the first reference device, includes:
1) based on reference location-related information (e.g., calculated location information) and actual location-related information (e.g., actual coordinate location information) of second reference devices (e.g., PRUs with known actual coordinate positions, UEs with satellite-positioned locations), the network device selects a second reference device whose error between the reference location-related information and the actual location-related information meets an error threshold (configured or pre-configured, also referred to as a location error threshold) as the first reference device. Here, the second reference device sends its own reference location-related information and actual location-related information to the network device.
2) the second reference device (e.g., PRUs with known actual coordinate positions, UEs with satellite positioning locations), based on its own reference location-related information (e.g., calculated location information) and actual location-related information (e.g., actual coordinate location information), determine itself as a first reference device when an error between the reference location-related information and actual location-related information meets an error threshold (configured or pre-configured, also referred to as a location error threshold). The reference location-related information and actual location-related information that the network device can receive are sent by the first reference device. Of course, one second reference device whose error does not meet the error threshold may only send its actual location-related information to the network device.

The first indication information includes a location range that the location information of the first user equipment needs to meet. A first range can be determined based on a location (actual coordinate position or calculated position) of the first reference device and a preconfigured threshold, and the first indication information is further determined to include the first range. For example, the first range includes a first longitude range and a first latitude range, the first longitude range is [longitude 1, longitude 2], and the first latitude range is [latitude 1, latitude 2].

The network device determines whether a calculated position of the third user equipment (such as UE1) meets the first range, such as a calculated position 1 of the UE1 is within the first longitude range of [longitude 1, longitude 2] and the first latitude range of [latitude 1, latitude 2], then the UE1 serves as the first user equipment.

Mode 2: the network device directly determines the first indication information; then, the network device determines whether the third user equipment serves as the first user equipment based on the first indication information.

Here, the first indication information determined by the network device includes location quality information (such as a location quality threshold) that location information (calculated location information) of the first user equipment needs to meet. The network device determines whether location quality information of a calculated location of the third user equipment (such as UE2) meets the location quality threshold; if so, then the UE2 is the first user equipment.

Mode 3: regardless of how the first indication information is determined, the network device can directly determine PRU or the user equipment with known actual location-related information (such as a UE with a known satellite positioning position) in the third user equipment as the first user equipment.

Step 2: the network device obtains the first information of the first user equipment from the first information of the third user equipment.

Step 3: the network device performs at least one of training, performance monitoring and updating of the AI model based on the first information.

### Scenario 2: UE-assisted/LMF-based positioning (in this scenario, taking the location-related information being ToA of the location-related information as an example for illustration; of course, the same applies to the angle-related information and the path indication information)

Step 1: the network device (such as LMF) obtains first information of third user equipment.

On the one hand, the network device directly receives the first information sent by the third user equipment; on the other hand, the network device receives a first signal sent by the third user equipment, and then determines the first information according to the first signal.

Here, the third user equipment may be all user equipment communicating with the network device, so as to ensure that a sufficient number of first user equipment are determined.

Step 2: the network device determines the first user equipment in the third user equipment according to the first indication information.

There are following three modes for determining the first UE:
Mode 1: the network device determines a first reference device, i.e., a target reference device, based on reference location-related information (such as calculated ToA) and actual location-related information (such as actual ToA) of a second reference device (such as a PRU with known actual coordinates, a UE with known satellite positioning position). At this point, performance of a position calculated or estimated by the target reference device is better and is less affected by nearby obstacles. The network device determines first indication information based on the first reference device. The network device determines whether the third user equipment serves as the first user equipment based on the first indication information.

The determining the first reference device, includes:
1) based on reference location-related information (such as calculated ToA) and actual location-related information (such as actual ToA) of second reference devices (such as PRUs with known actual coordinates, UEs with known satellite positioning position), the network device selects a second reference device whose error between the reference location-related information and the actual location-related information meets an error threshold (configured or preset, also called time error threshold) as the first reference device. Here, the second reference device sends its own reference location-related information and actual location-related information to the network device.
2) the second reference device (such as a PRU with known actual coordinates, a UE with known satellite positioning), based on its own reference time-related information (e.g., calculated ToA) and actual time-related information (e.g., actual ToA), determines itself as the first reference device when an error between the reference time-related information and the actual time-related information meets an error threshold (configured or pre-configured, also referred to as a time error threshold). The reference location-related information and actual location-related information that can be received by the network device are sent by the first reference device. Of course, one second reference device whose error does not meet the error threshold can only send its actual location-related information to the network device.

The first indication information includes a time range that the time-related information of the first user equipment needs to meet. A first ToA range can be determined based on ToA of the first reference device (actual ToA or calculated ToA) and a preconfigured threshold (such as a preused toA offset). The first indication information is further determined to include the first ToA range. For example, for a certain TRP, a calculated ToA from a target reference device to the TRP is recorded as noisy ToA, then the first ToA range is [noisy ToA-ToA offset, noisy ToA+ToA offset].

The network device determines whether a calculated ToA of the third user equipment (such as UE1) meets the first ToA range. If the calculated ToA of the UE1 is within the first ToA range [noisy ToA-ToA offset, noisy ToA+ToA offset], i.e., meeting the first ToA range, then UE1 serves as the first user equipment.

Mode 2: the network device directly determines the first indication information; then, the network device determines whether the third user equipment serves as the first user equipment based on the first indication information.

Here, the network device determines that the first indication information includes time quality information (such as ToA quality threshold) that the time-related information (calculated ToA) of the first user equipment needs to meet. The network device determines that the ToA quality information of the calculated ToA of the third user equipment (such as UE2) meets the ToA quality threshold, and then the UE2 serves as the first user equipment.

Mode 3: regardless of how the first indication information is determined, the network device can directly determine PRU or user equipment with known actual location-related information (such as a UE with a known satellite positioning position) in the third user equipment as the first user equipment.

Step 2: the network device obtains the first information of the first user equipment from the first information of the third user equipment.

Step 3: the network device performs at least one of training, performance monitoring and updating of the AI model based on the first information.

Scenario 3: based on NG-RAN node assisted positioning, TRP/gNB side determines an intermediate measurement quantity (time-related information, angle-related information, path indication information, etc.) used to estimate a location of a UE, and LMF side estimates the location of the UE based on the intermediate measurement quantity (in this scenario, taking the location-related information being ToA of the time-related information as an example for illustration; of course, the same applies to the angle-related information and path indication information).

Step 1: a network device (such as LMF) obtains first information of third user equipment.

On the one hand, the network device directly receives the first information sent by the third user equipment; on the other hand, the network device receives a first signal sent by the third user equipment, and then determines the first information according to the first signal.

Here, the third user equipment may be all user equipment communicating with the network device, so as to ensure that a sufficient number of first user equipment are determined.

Step 2: the network device determines first user equipment in the third user equipment according to the first indication information.

There are following three modes for determining the first UE:
Mode 1: the network device determines a first reference device, i.e., a target reference device, based on reference location-related information (such as calculated ToA) and actual location-related information (such as actual ToA) of a second reference device (such as a PRU with known actual coordinates, a UE with known satellite positioning position). At this point, performance of a position calculated or estimated by the target reference device is better and is less affected by nearby obstacles. The network device determines first indication information based on the first reference device. The network device determines whether the third user equipment serves as the first user equipment based on the first indication information.

The determining the first reference device, includes:
1) based on reference location-related information (e.g., calculated ToA) and actual location-related information (e.g., actual ToA) of second reference devices (e.g., PRUs with known actual coordinate positions, UEs with satellite-positioned locations), the network device selects a second reference device whose error between the reference location-related information and the actual location-related information meets an error threshold (configured or pre-configured, also referred to as a time error threshold). Here, the second reference device sends its own reference location-related information and actual location-related information to the network device.
2) the second reference device (such as a PRU with known actual coordinates, a UE with known satellite positioning), based on its own reference location-related information (such as calculated ToA) and actual location-related information (such as actual ToA), determines to be the first reference device when an error between the reference location-related information and the actual location-related information meets an error threshold (configured or preset, also called time error threshold). The reference location-related information and actual location-related information that can be received by the network device are sent by the first reference device. Of course, one second reference device whose error does not meet the error threshold can only send its actual location-related information to the network device.

The first indication information includes a time range that the time-related information of the first user equipment needs to meet. A first ToA range can be determined based on ToA (actual ToA or calculated ToA) of the first reference device and a preconfigured threshold (such as a preused toA offset). The first indication information is further determined to include the first ToA range. For example, for a certain TRP, a calculated ToA from a target reference device to the TRP is recorded as noisy ToA, then the first ToA range is [noisy ToA-ToA offset, noisy ToA+ToA offset].

The network device determines whether a calculated ToA (such as ToA estimated by TRP through the UL-SRS sent by UE1) corresponding to the third user equipment (such as UE1) meets the first ToA range, such as the calculated ToA corresponding to UE1 is within the first ToA range of [noisy ToA-ToA offset, noisy ToA+ToA offset], i.e., meeting the first ToA range, then the UE1 serves as the first user equipment.

Mode 2: the network device directly determines the first indication information; then, the network device determines whether the third user equipment serves as the first user equipment based on the first indication information.

Here, the network device determines that the first indication information includes time quality information (such as ToA quality threshold) that the time-related information (calculated ToA) of the first user equipment needs to meet. The network device determines whether the ToA quality information of the calculated ToA (such as the ToA estimated by TRP in the UL-SRS sent by UE2) corresponding to the third user equipment (such as UE2) meets the ToA quality threshold; if so, the UE2 serves the first user equipment.

Mode 3: regardless of how the first indication information is determined, the network device can directly determine PRU or user equipment with known actual location-related information (such as a UE with a known satellite positioning position) in the third user equipment as the first user equipment.

Step 2: the network device obtains first information of the first user equipment from the first information of the third user equipment.

Step 3: the network device performs at least one of training, performance monitoring and updating of the AI model based on the first information.

In summary, in the present disclosure, the first user equipment is filtered out from the third user equipment through the first indication information, and the first information of the first user equipment is used for at least one of training, performance monitoring and updating of the first model, thereby avoiding the problem that in a case of a small number of PRUs, the data provided by the small number of PRUs cannot meet the demand.

As shown in FIG. 4, a data processing method according to an embodiment of the present disclosure includes:
Step 401: sending, by third user equipment, first information and/or first signal.

The first signal is used to determine the first information;
When the third user equipment serves as first user equipment, the first information is used for one or more of the following:
training of a first model; performance monitoring of the first model; updating of the first model.

The first model is used to determine location-related information of the user equipment.

In this way, after the network device receives the first information and/or the first signal sent by the third user equipment, the network device can determine the first user equipment in the third user equipment based on the first indication information. In this way, the first information of the first user equipment is obtained from the first information of the third user equipment, and the first information can be used for at least one of the training, performance monitoring and updating of the first model, thereby avoiding the problem that in a case of a small number of PRUs, the data provided by the small number of PRUs cannot meet the demand.

Optionally, the first information includes at least one of the following:
channel observation result; location-related information of the first user equipment.

As shown in FIG. 5, one embodiment of the present disclosure further provides a data processing apparatus, including: a memory 520, a transceiver 510, and a processor 500. The memory 520 is used to store program instructions; the transceiver 510 is used to send and receive data under the control of the processor 500; the processor 500 is used to read the program instructions in the memory 520 and perform the following operations:
sending first indication information, where the first indication information is used to determine a first user equipment (UE);
receiving first information and/or a first signal sent by a second user equipment, where the first information and/or the first signal is sent by the second user equipment when the second user equipment determines that it serves as the first user equipment;
sending the received first information and/or first signal to a first device; or, according to the received first information and/or first signal, performing one or more of the following: training of a first model, performance monitoring of the first model, and updating of the first model;
where the first model is used to determine location-related information of the user equipment.

In FIG. 5, a bus architecture may include any number of interconnected bus and bridge. Specifically, various circuits of one or more processors, which are represented by the processor 500, and one or more memories, which are represented by the memory 520, are linked together. The bus architecture may link various other circuits, such as a peripheral device, voltage regulator and a power management circuit together. These features are well known in this field; therefore, this disclosure does not make further description on these features. The bus interface provides an interface. The transceiver 510 may be multiple elements, including a transmitter and a receiver and provide units, which communicate with other devices on the transmission medium. The transmission medium includes transmission media such as wireless channels, wired channels, and optical cables. The processor 500 is responsible for managing the bus architecture and the normal processing. The memory 520 may be used to store data used by the processor 500 for performing operations.

The processor 500 may be a central processing unit (CPU), an application specific integrated circuit (ASIC), a field-programmable gate array (FPGA) or a complex programmable logic device (CPLD). The processor may also adopt multi-core architecture.

Optionally, the processor is further used to send the first indication information, via broadcasting or multicasting.

Optionally, the processor is further used to determine first information according to the first signal.

Optionally, the first information includes at least one of the following:
channel observation result; location-related information of the first user equipment.

Optionally, the first indication information includes one or more of the following:
range information that the location-related information of the first user equipment needs to meet;
quality information that the location-related information of the first user equipment needs to meet;
threshold information that needs to be met between the location-related information of the first user equipment and the location-related information of a first reference device, where the first reference device is a device used to determine the first user equipment.

Optionally, the location-related information includes one or more of the following:
location information; time-related information; angle-related information; path indication information.

Optionally, the range information that the location-related information of the first user equipment needs to meet, includes one or more of the following:
a location range that the location information of the first user equipment needs to meet;
a time range that the time-related information of the first user equipment needs to meet;
an angle range that the angle-related information of the first user equipment needs to meet.

Optionally, the quality information that the location-related information of the first user equipment needs to meet, includes:
location quality information that the location information of the first user equipment needs to meet;
time quality information that the time-related information of the first user equipment needs to meet;
angle quality information that the angle-related information of the first user equipment needs to meet;
path indication quality information that the path indication information of the first user equipment needs to meet.

Optionally, threshold information that needs to be met between the location-related information of the first user equipment and the location-related information of the first reference device, includes:
a distance threshold that a distance between a location of the first user equipment and a location of a first reference device needs to meet;
a time threshold that a time difference between the time-related information of the first user equipment and the time-related information of the first reference device needs to meet;
an angle threshold that an angle difference between the angle-related information of the first user equipment and the angle-related information of the first reference device needs to meet.

Optionally, the processor is further used to:
determine reference location-related information and actual location-related information of a second reference device;
determine the first indication information according to the reference location-related information and the actual location-related information.

Optionally, the second reference device includes one or more of the following:
positioning reference unit (PRU); a user equipment that is aware of actual location-related information.

Optionally, the processor is further used to:
receive one or more of the following items sent by the second reference device:
reference location-related information of the second reference device; actual location-related information of the second reference device; and an obtaining method of the actual location-related information.

Optionally, the processor is further used to:
determine a first reference device according to the reference location-related information and the actual location-related information;
determine the first indication information according to the first reference device.

Optionally, the processor is further used to:
calculate an error between the reference location-related information and the actual location-related information;
based on the error and an error threshold, determine the first reference device.

Optionally, the processor is further used to:
send an error threshold, where the error threshold is used to determine the first reference device;
determine a second reference device that sends the reference location-related information and the actual location-related information as the first reference device; where an error between the reference location-related information and the actual location-related information of the first reference device meets the error threshold.

Optionally, the processor is further used to:
receive actual location-related information sent by a third reference device; where the third reference device sends the actual location-related information when the third reference device receives the error threshold and determines that an error between its own reference location-related information and actual location-related information does not meet the error threshold.

Optionally, the first information and/or first signal received by the network device is sent by the first user equipment when the first user equipment receives the first indication information and the location-related information of the first user equipment meets the first indication information.

Optionally, the first indication information further includes:
location-related information of the first reference device.

Optionally, a time when the reference location-related information of the second reference device is determined, and a time when the actual location-related information of the second reference device is determined, both meet a first validity time; and/or
a time difference between a time when the reference location-related information of the second reference device is determined and a time when the actual location-related information of the second reference device is determined, meets a time threshold.

Optionally, the processor is further used to:
determine the first validity time and/or the time threshold.

It is to be noted that the foregoing device provided in the embodiments of the present disclosure can perform all the method steps performed in the foregoing method embodiments, and can achieve the same technical effect. The parts and beneficial effects in this embodiment that are the same as those in the method embodiment will not be described in detail here.

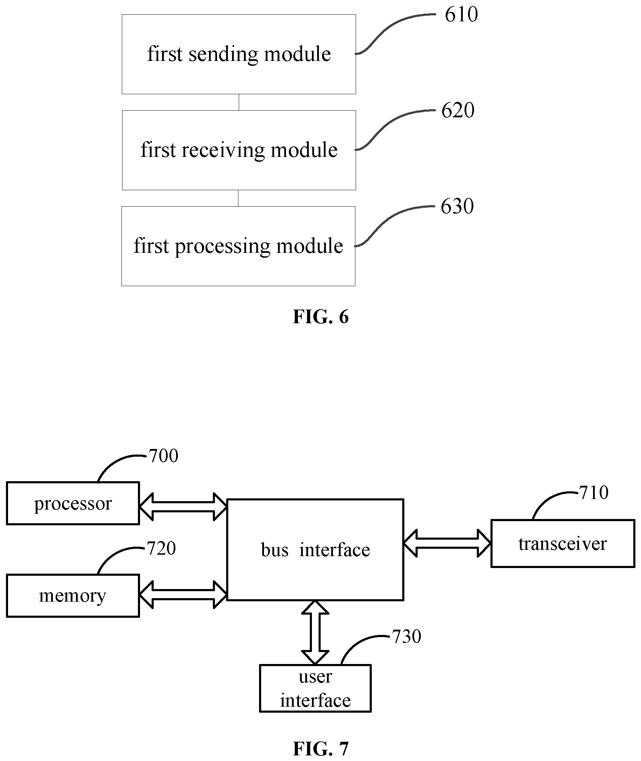

As shown in FIG. 6, one embodiment of the present disclosure further provides a data processing apparatus, including:
a first sending module 610 used to send first indication information, where the first indication information is used to determine a first user equipment;
a first receiving module 620 used to receive first information and/or a first signal sent by a second user equipment, where the first information and/or the first signal is sent by the second user equipment when the second user equipment determines that it serves as the first user equipment;
a first processing module 630 is used to send the received first information and/or first signal to a first device; or, according to the received first information and/or first signal, perform one or more of the following: training of a first model, performance monitoring of the first model, and updating of the first model;
where the first model is used to determine location-related information of the user equipment.

Optionally, the first sending module is further used to send the first indication information, via broadcasting or multicasting.

Optionally, the apparatus further includes:
a second determining module used to determine first information according to the first signal.

Optionally, the first information includes at least one of the following:
channel observation result; location-related information of the first user equipment.

Optionally, the first indication information includes one or more of the following:
range information that the location-related information of the first user equipment needs to meet;
quality information that the location-related information of the first user equipment needs to meet;
threshold information that needs to be met between the location-related information of the first user equipment and the location-related information of a first reference device, where the first reference device is a device used to determine the first user equipment.

Optionally, the location-related information includes one or more of the following:
location information; time-related information; angle-related information; path indication information.

Optionally, the range information that the location-related information of the first user equipment needs to meet, includes one or more of the following:
a location range that the location information of the first user equipment needs to meet;
a time range that the time-related information of the first user equipment needs to meet;
an angle range that the angle-related information of the first user equipment needs to meet.

Optionally, the quality information that the location-related information of the first user equipment needs to meet, includes:
location quality information that the location information of the first user equipment needs to meet;
time quality information that the time-related information of the first user equipment needs to meet;
angle quality information that the angle-related information of the first user equipment needs to meet;
path indication quality information that the path indication information of the first user equipment needs to meet.

Optionally, threshold information that needs to be met between the location-related information of the first user equipment and the location-related information of the first reference device, includes:
a distance threshold that a distance between a location of the first user equipment and a location of a first reference device needs to meet;
a time threshold that a time difference between the time-related information of the first user equipment and the time-related information of the first reference device needs to meet;
an angle threshold that an angle difference between the angle-related information of the first user equipment and the angle-related information of the first reference device needs to meet.

Optionally, the apparatus further includes:
a third determination module used to determine reference location-related information and actual location-related information of a second reference device;
a fourth determining module used to determine the first indication information according to the reference location-related information and the actual location-related information.

Optionally, the second reference device includes one or more of the following:
positioning reference unit (PRU); a user equipment that is aware of actual location-related information.

Optionally, the apparatus further includes:
a third receiving module used to receive one or more of the following items sent by the second reference device:
reference location-related information of the second reference device; actual location-related information of the second reference device; and an obtaining method of the actual location-related information.

Optionally, the fourth determining module includes:
a first determining unit used to determine a first reference device according to the reference location-related information and the actual location-related information;
a second determining unit used to determine the first indication information according to the first reference device.

Optionally, the first determining unit is further used to:
calculate an error between the reference location-related information and the actual location-related information;
based on the error and an error threshold, determine the first reference device.

Optionally, the fourth determining module includes:
a first sending unit used to send an error threshold, where the error threshold is used to determine the first reference device;
a third determination unit used to determine a second reference device that sends the reference location-related information and the actual location-related information as the first reference device; where an error between the reference location-related information and the actual location-related information of the first reference device meets the error threshold.

Optionally, the apparatus further includes:
a fourth receiving module used to receive actual location-related information sent by a third reference device; where the third reference device sends the actual location-related information when the third reference device receives the error threshold and determines that an error between its own reference location-related information and actual location-related information does not meet the error threshold.

Optionally, the first information and/or first signal received by the network device is sent by the first user equipment when the first user equipment receives the first indication information and the location-related information of the first user equipment meets the first indication information.

Optionally, the first indication information further includes: location-related information of the first reference device.

Optionally, a time when the reference location-related information of the second reference device is determined, and a time when the actual location-related information of the second reference device is determined, both meet a first validity time; and/or
a time difference between a time when the reference location-related information of the second reference device is determined and a time when the actual location-related information of the second reference device is determined, meets a time threshold.

Optionally, the apparatus further includes:
a fifth determination module used to determine the first validity time and/or the time threshold.

It is to be noted that the foregoing device provided in the embodiments of the present disclosure can perform all the method steps performed in the foregoing method embodiments, and can achieve the same technical effect. The parts and beneficial effects in this embodiment that are the same as those in the method embodiment will not be described in detail here.

As shown in FIG. 7, one embodiment of the present disclosure further provides a data processing apparatus, including: a memory 720, a transceiver 710, and a processor 700. The memory 720 is used to store program instructions; the transceiver 710 is used to send and receive data under the control of the processor 700; the processor 700 is used to read the program instructions in the memory 720 and perform the following operations:
receiving first indication information, where the first indication information is used to determine a first user equipment to obtain first information of the first user equipment;
where the first information is used for one or more of the following:
   training of a first model; performance monitoring of the first model; updating of the first model.

The first model is used to determine location-related information of the user equipment.

In FIG. 7, a bus architecture may include any number of interconnected bus and bridge. Specifically, various circuits of one or more processors, which are represented by the processor 700, and one or more memories, which are represented by the memory 520, are linked together. The bus architecture may link various other circuits, such as a peripheral device, voltage regulator and a power management circuit together. These features are well known in this field; therefore, this disclosure does not make further description on these features. The bus interface provides an interface. The transceiver 710 may be multiple elements, including a transmitter and a receiver and provide units, which communicate with other devices on the transmission medium. The transmission medium includes transmission media such as wireless channels, wired channels, and optical cables. For different UEs, a user interface 730 may be an interface that can be connected to external or internal devices. The connected devices include but are not limited to a small keyboard, a display, a speaker, a microphone, a joystick, etc.

The processor 700 is responsible for managing the bus architecture and the normal processing. The memory 720 may be used to store data used by the processor 700 for performing operations.

Optionally, the processor 700 may be a central processing unit (CPU), an application specific integrated circuit (ASIC), a field-programmable gate array (FPGA) or a complex programmable logic device (CPLD). The processor may also adopt multi-core architecture.

The processor 700 calls the computer program stored in the memory to execute any of the methods provided by the embodiments of the present disclosure according to obtained executable instructions. The processor 700 and the memory 720 may also be arranged physically separately.

The processor is further used to send first information and/or first signal;
where the first signal is used to determine the first information.

Optionally, the processor is further used to:
when receiving the first indication information and determining that its own location-related information meets the first indication information, send the first information and/or the first signal.

Optionally, the location-related information includes one or more of the following:
location information; time-related information; angle-related information; path indication information.

Optionally, the first information includes at least one of the following:
channel observation result; location-related information of the first user equipment.

Optionally, the first indication information includes one or more of the following:
range information that the location-related information of the first user equipment needs to meet;
quality information that the location-related information of the first user equipment needs to meet;
threshold information that needs to be met between the location-related information of the first user equipment and the location-related information of a first reference device, where the first reference device is a device used to determine the first user equipment.

Optionally, the range information that the location-related information of the first user equipment needs to meet, includes one or more of the following:
a location range that the location information of the first user equipment needs to meet;
a time range that the time-related information of the first user equipment needs to meet;
an angle range that the angle-related information of the first user equipment needs to meet.

Optionally, the quality information that the location-related information of the first user equipment needs to meet, includes:
location quality information that the location information of the first user equipment needs to meet;
time quality information that the time-related information of the first user equipment needs to meet;
angle quality information that the angle-related information of the first user equipment needs to meet;
path indication quality information that the path indication information of the first user equipment needs to meet.

Optionally, threshold information that needs to be met between the location-related information of the first user equipment and the location-related information of the first reference device, includes:
a distance threshold that a distance between a location of the first user equipment and a location of a first reference device needs to meet;
a time threshold that a time difference between the time-related information of the first user equipment and the time-related information of the first reference device needs to meet;
an angle threshold that an angle difference between the angle-related information of the first user equipment and the angle-related information of the first reference device needs to meet.

Optionally, the first indication information further includes: location-related information of the first reference device.

It is to be noted that this method is implemented in conjunction with the data processing method performed by the network device as shown in FIG. 1. The implementation of the embodiment of the above method is applicable to this method and can achieve the same technical effect.

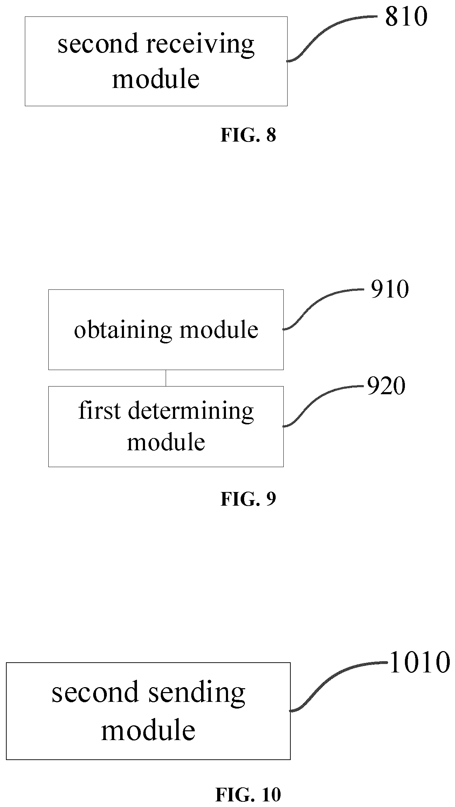

As shown in FIG. 8, one embodiment of the present disclosure further provides a data processing apparatus, including:
a second receiving module 810 used to receive first indication information, where the first indication information is used to determine a first user equipment to obtain first information of the first user equipment;
where the first information is used for one or more of the following:
   training of a first model; performance monitoring of the first model; updating of the first model.

The first model is used to determine location-related information of the user equipment.

Optionally, the apparatus further includes:
a third sending module used to send first information and/or first signal; where the first signal is used to determine the first information.

Optionally, the third sending module is further used to:
when receiving the first indication information and determining that its own location-related information meets the first indication information, send the first information and/or the first signal.

Optionally, the location-related information includes one or more of the following:
location information; time-related information; angle-related information; path indication information.

Optionally, the first information includes at least one of the following:
channel observation result; location-related information of the first user equipment.

Optionally, the first indication information includes one or more of the following:
range information that the location-related information of the first user equipment needs to meet;
quality information that the location-related information of the first user equipment needs to meet;
threshold information that needs to be met between the location-related information of the first user equipment and the location-related information of a first reference device, where the first reference device is a device used to determine the first user equipment.

Optionally, the range information that the location-related information of the first user equipment needs to meet, includes one or more of the following:
a location range that the location information of the first user equipment needs to meet;
a time range that the time-related information of the first user equipment needs to meet;
an angle range that the angle-related information of the first user equipment needs to meet.

Optionally, the quality information that the location-related information of the first user equipment needs to meet, includes:
location quality information that the location information of the first user equipment needs to meet;
time quality information that the time-related information of the first user equipment needs to meet;
angle quality information that the angle-related information of the first user equipment needs to meet;
path indication quality information that the path indication information of the first user equipment needs to meet.

Optionally, threshold information that needs to be met between the location-related information of the first user equipment and the location-related information of the first reference device, includes:
a distance threshold that a distance between a location of the first user equipment and a location of a first reference device needs to meet;
a time threshold that a time difference between the time-related information of the first user equipment and the time-related information of the first reference device needs to meet;
an angle threshold that an angle difference between the angle-related information of the first user equipment and the angle-related information of the first reference device needs to meet.

Optionally, the first indication information further includes: location-related information of the first reference device.

It is to be noted that this method is implemented in conjunction with the data processing method performed by the network device as shown in FIG. 1. The implementation of the embodiment of the above method is applicable to this method and can achieve the same technical effect.

One embodiment of the present disclosure further provides a data processing apparatus, including: a memory, a transceiver, and a processor.

The memory is used to store program instructions; the transceiver is used to send and receive data under the control of the processor; and the processor is used to read the program instructions in the memory and perform the following operations:
obtaining first information of third user equipment;
determining a first user equipment in the third user equipment according to the first indication information.

The first information of the first user equipment is used for one or more of the following:
training of the first model; performance monitoring of the first model; updating of the first model.

The first model is used to determine location-related information of the user equipment.

Optionally, the processor is further used to receive the first information sent by the third user equipment.

Optionally, the processor is further used to:
receive a first signal sent by the third user equipment;
determine first information according to the first signal.

Optionally, the processor is further used to perform one or more of the following according to the first information of the first user equipment:
training of the first model; performance monitoring of the first model; and updating of the first model.

Optionally, the first information of the third user equipment includes at least one of the following:
channel observation result; location-related information of the third user equipment.

Optionally, the first information of the first user equipment includes at least one of the following:
channel observation result; location-related information of the first user equipment.

Optionally, the location-related information includes one or more of the following:
location information; time-related information; angle-related information; path indication information.

Optionally, the first indication information includes one or more of the following:
range information that the location-related information of the first user equipment needs to meet;
quality information that the location-related information of the first user equipment needs to meet;
threshold information that needs to be met between the location-related information of the first user equipment and the location-related information of a first reference device, where the first reference device is a device used to determine the first user equipment.

Optionally, the range information that the location-related information of the first user equipment needs to meet, includes one or more of the following:
a location range that the location information of the first user equipment needs to meet;
a time range that the time-related information of the first user equipment needs to meet;
an angle range that the angle-related information of the first user equipment needs to meet.

Optionally, the quality information that the location-related information of the first user equipment needs to meet, includes:
location quality information that the location information of the first user equipment needs to meet;
time quality information that the time-related information of the first user equipment needs to meet;
angle quality information that the angle-related information of the first user equipment needs to meet;
path indication quality information that the path indication information of the first user equipment needs to meet.

Optionally, threshold information that needs to be met between the location-related information of the first user equipment and the location-related information of the first reference device, includes:
a distance threshold that a distance between a location of the first user equipment and a location of a first reference device needs to meet;
a time threshold that a time difference between the time-related information of the first user equipment and the time-related information of the first reference device needs to meet;
an angle threshold that an angle difference between the angle-related information of the first user equipment and the angle-related information of the first reference device needs to meet.

Optionally, the processor is further used to:
determine reference location-related information and actual location-related information of a second reference device;
determine the first indication information according to the reference location-related information and the actual location-related information.

Optionally, the second reference device includes one or more of the following:
positioning reference unit (PRU); a user equipment that is aware of actual location-related information.

Optionally, the processor is further used to: receive one or more of the following sent by the second reference device:
reference location-related information of the second reference device; actual location-related information of the second reference device; and an obtaining method of the actual location-related information.

Optionally, the processor is further used to:
determine a first reference device according to the reference location-related information and the actual location-related information;
determine the first indication information according to the first reference device.

Optionally, the processor is further used to:
calculate an error between the reference location-related information and the actual location-related information;
determine the first reference device according to the error and an error threshold.

Optionally, the processor is further used to send an error threshold, where the error threshold is used to determine the first reference device.

Optionally, the processor is further used to determine a second reference device that sends the reference location-related information and the actual location-related information, as the first reference device; where an error between the reference location-related information and the actual location-related information of the first reference device meets the error threshold.

Optionally, the processor is further used to: receive actual location-related information sent by a third reference device; where the third reference device sends the actual location-related information when the third reference device receives the error threshold and determines that an error between reference location-related information and actual location-related information of the third reference device does not meet the error threshold.

Optionally, the first indication information further includes: location-related information of the first reference device.

Optionally, a time when the reference location-related information of the second reference device is determined, and a time when the actual location-related information of the second reference device is determined, both meet a first validity time; and/or
a time difference between a time when the reference location-related information of the second reference device is determined and a time when the actual location-related information of the second reference device is determined, meets a time threshold.

Optionally, the processor is further used to determine the first validity time and/or the time threshold.

It is to be noted that the foregoing device provided in the embodiments of the present disclosure can perform all the method steps performed in the foregoing method embodiments, and can achieve the same technical effect. The parts and beneficial effects in this embodiment that are the same as those in the method embodiment will not be described in detail here.

As shown in FIG. 9, one embodiment of the present disclosure further provides a data processing apparatus, including:
an obtaining module 910 used to obtain first information of third user equipment;
a first determining module 920 used to determine a first user equipment in the third user equipment according to the first indication information.

The first information of the first user equipment is used for one or more of the following:
training of the first model; performance monitoring of the first model; updating of the first model.

The first model is used to determine location-related information of the user equipment.

Optionally, the obtaining module is further used to receive the first information sent by the third user equipment.

Optionally, the obtaining module is further used to:
receive a first signal sent by the third user equipment;
determine first information according to the first signal.

Optionally, the apparatus further includes:
a second processing module used to perform one or more of the following according to the first information of the first user equipment:
training of the first model; performance monitoring of the first model; and updating of the first model.

Optionally, the first information of the third user equipment includes at least one of the following:
channel observation result; location-related information of the third user equipment.

Optionally, the first information of the first user equipment includes at least one of the following:
channel observation result; location-related information of the first user equipment.

Optionally, the location-related information includes one or more of the following:
location information; time-related information; angle-related information; path indication information.

Optionally, the first indication information includes one or more of the following:
range information that the location-related information of the first user equipment needs to meet;
quality information that the location-related information of the first user equipment needs to meet;
threshold information that needs to be met between the location-related information of the first user equipment and the location-related information of a first reference device, where the first reference device is a device used to determine the first user equipment.

Optionally, the range information that the location-related information of the first user equipment needs to meet, includes one or more of the following:
a location range that the location information of the first user equipment needs to meet;
a time range that the time-related information of the first user equipment needs to meet;
an angle range that the angle-related information of the first user equipment needs to meet.

Optionally, the quality information that the location-related information of the first user equipment needs to meet, includes:
location quality information that the location information of the first user equipment needs to meet;
time quality information that the time-related information of the first user equipment needs to meet;
angle quality information that the angle-related information of the first user equipment needs to meet;
path indication quality information that the path indication information of the first user equipment needs to meet.

Optionally, threshold information that needs to be met between the location-related information of the first user equipment and the location-related information of the first reference device, includes:
a distance threshold that a distance between a location of the first user equipment and a location of a first reference device needs to meet;
a time threshold that a time difference between the time-related information of the first user equipment and the time-related information of the first reference device needs to meet;
an angle threshold that an angle difference between the angle-related information of the first user equipment and the angle-related information of the first reference device needs to meet.

Optionally, the apparatus further includes:
a sixth determination module used to determine reference location-related information and actual location-related information of a second reference device;
a seventh determination module used to determine the first indication information according to the reference location-related information and the actual location-related information.

Optionally, the second reference device includes one or more of the following:
positioning reference unit (PRU); a user equipment that is aware of actual location-related information.

Optionally, the apparatus further includes:
a fifth receiving module used to receive one or more of the following sent by the second reference device:
reference location-related information of the second reference device; actual location-related information of the second reference device; and an obtaining method of the actual location-related information.

Optionally, the seventh determining module is further used to:
determine a first reference device according to the reference location-related information and the actual location-related information;
determine the first indication information according to the first reference device.

Optionally, the seventh determining module is further used to:
calculate an error between the reference location-related information and the actual location-related information;
determine the first reference device according to the error and an error threshold.

Optionally, the seventh determining module is further used to:
send an error threshold, where the error threshold is used to determine the first reference device;
determine a second reference device that sends the reference location-related information and the actual location-related information, as the first reference device; where an error between the reference location-related information and the actual location-related information of the first reference device meets the error threshold.

Optionally, the apparatus further includes:
a sixth receiving module used to receive actual location-related information sent by a third reference device; where the third reference device sends the actual location-related information when the third reference device receives the error threshold and determines that an error between reference location-related information and actual location-related information of the third reference device does not meet the error threshold.

Optionally, the first indication information further includes: location-related information of the first reference device.

Optionally, a time when the reference location-related information of the second reference device is determined, and a time when the actual location-related information of the second reference device is determined, both meet a first validity time; and/or
a time difference between a time when the reference location-related information of the second reference device is determined and a time when the actual location-related information of the second reference device is determined, meets a time threshold.

Optionally, the apparatus further includes:
an eighth determination module used to determine the first validity time and/or the time threshold.

It is to be noted that the foregoing device provided in the embodiments of the present disclosure can perform all the method steps performed in the foregoing method embodiments, and can achieve the same technical effect. The parts and beneficial effects in this embodiment that are the same as those in the method embodiment will not be described in detail here.

One embodiment of the present disclosure further provides a data processing apparatus, including: a memory, a transceiver, and a processor.

The memory is used to store program instructions; the transceiver is used to send and receive data under the control of the processor; and the processor is used to read the program instructions in the memory and perform the following operations:
sending first information and/or first signal; where the first signal is used to determine the first information.

When the third user equipment serves as first user equipment, the first information is used for one or more of the following:
training of a first model; performance monitoring of the first model; updating of the first model.

The first model is used to determine location-related information of the user equipment.

Optionally, the first information includes at least one of the following:
channel observation result; location-related information of the first user equipment.

Here, the first information is sent by the first user equipment, or is determined based on a first signal sent by the first user equipment.

It is to be noted that the foregoing device provided in the embodiments of the present disclosure can perform all the method steps performed in the foregoing method embodiments, and can achieve the same technical effect. The parts and beneficial effects in this embodiment that are the same as those in the method embodiment will not be described in detail here.

As shown in FIG. 10, one embodiment of the present disclosure further provides a data processing apparatus, including:
a second sending module 1010 used to send first information and/or the first signal; where the first signal is used to determine the first information.

When the third user equipment serves as first user equipment, the first information is used for one or more of the following:
training of a first model; performance monitoring of the first model; updating of the first model.

The first model is used to determine location-related information of the user equipment.

Optionally, the first information includes at least one of the following:
channel observation result; location-related information of the first user equipment.

Here, the first information is sent by the first user equipment, or is determined based on a first signal sent by the first user equipment.

It is to be noted that the foregoing device provided in the embodiments of the present disclosure can perform all the method steps performed in the foregoing method embodiments, and can achieve the same technical effect. The parts and beneficial effects in this embodiment that are the same as those in the method embodiment will not be described in detail here.

It is to be noted that division of units in the embodiment of the present disclosure is exemplary, and is only a logical function division, and there may be another division manner in actual implementation. In addition, each functional unit in each embodiment of the present application may be integrated into one processing unit, each unit may exist separately physically, or two or more units may be integrated into one unit. The foregoing integrated units may be implemented in the form of hardware or in the form of software functional units.

If the integrated units are realized in the form of software function units and sold or used as independent products, they may be stored in a processor-readable storage medium. Based on this understanding, the essence of the technical solution of the present disclosure or the part that contributes to the related art or the part of the technical solution may be embodied in the form of a software product. The computer software product is stored in a storage medium, includes several instructions which enables a computer device (which may be a personal computer, a server, or a network device, etc.) or a processor to execute all or part of the steps of the methods described in various embodiments of the present disclosure. The storage medium includes various media capable of storing program codes such as U disk, mobile hard disk, ROM, RAM, magnetic disk or optical disk.

It is to be noted that the foregoing device provided in the embodiments of the present disclosure can perform all the method steps performed in the foregoing method embodiments, and can achieve the same technical effect. The parts and beneficial effects in this embodiment that are the same as those in the method embodiment will not be described in detail here.

One embodiment of the present disclosure further provides a processor-readable storage medium, which includes program instructions stored thereon. The computer program is used to cause a processor to execute the foregoing network-side data processing method, or the above UE-side data processing method.

When the program instructions are executed by the processor, all implementation methods of the method embodiment applied to the network side as shown in FIG. 1 can be implemented, which will not be described here to avoid repetition.

When the program instructions are executed by the processor, all implementation methods of the method embodiment applied to the UE side as shown in FIG. 2 can be implemented, which will not be described here to avoid repetition.

When the program instructions are executed by the processor, all implementation methods of the method embodiment applied to the network side as shown in FIG. 3 can be implemented, which will not be described here to avoid repetition.

When the program instructions are executed by the processor, all implementation methods of the method embodiment applied to the UE side as shown in FIG. 4 can be implemented, which will not be described here to avoid repetition.

The technical solutions provided in the embodiments of the present disclosure may be applicable to various systems, especially the fifth generation communication (5G) system. For example, applicable systems may be global system of mobile communication (GSM) system, code division multiple access (CDMA) system, wideband code division multiple access (WCDMA) general packet wireless service (GPRS) system, long term evolution (LTE) system, LTE frequency division duplex (FDD) system, LTE time division duplex (TDD) system, long term evolution advanced (LTE-A) system, universal mobile telecommunication system (UMTS), worldwide interoperability for microwave access (WiMAX) system, 5G new radio (NR) system, etc. Each of the various systems includes a user equipment and a network device. The system may further include a core network part, such as an evolved packet system (EPS), a 5G system (5GS).

Terminal devices involved in the embodiments of the present disclosure may be a device that provides voice and/or data connectivity to a user, a handheld device with a wireless connection function, or other processing device coupled to a wireless modem. In different systems, names of terminal devices may be different. For example, in the 5G system, the terminal device may be referred as user equipment (UE). A wireless terminal device may communicate with one or more core networks (CN) via a radio access network (RAN). The wireless terminal device may be a mobile terminal device such as a mobile phone (or referred as cell phone), or a computer with a mobile terminal device, such as a portable, pocket-sized, handheld, computer built-in or vehicle-mounted mobile device, which exchange language and/or data with wireless access networks, for example, a personal communication service (PCS) phone, a cordless phone, a session initiated protocol (SIP) phone, a wireless local loop (WLL) station, a personal digital assistant (PDA) and other device. The wireless terminal device may also be referred to as system, subscriber unit, subscriber station, mobile station, mobile, remote station, access point, remote terminal, access terminal, user terminal, user agent, or user device, which are not limited in the embodiments of the present disclosure.

The network device involved in the embodiments of the present disclosure may be a base station, and the base station may include a plurality of cells for providing services for the terminal. According to different specific application scenarios, the base station may also be referred as an access point, or the base station may be a device in an access network that communicates with wireless terminal devices through one or more sectors on air interfaces, or other names. The network device may be used to exchange received frames with internet protocol (IP) packets, and act as a router between the wireless terminal device and the rest of the access network, where the rest of the access network may include an internet protocol (IP) communication network. The network device may also coordinate attribute management for air interfaces. For example, the network device involved in the embodiments of the present disclosure may be a base transceiver station (BTS) in global system for mobile communications (GSM) or code division multiple access (CDMA), a NodeB in wide-band code division multiple access (WCDMA), an evolutional Node B (eNB or e-NodeB) in long term evolution (LTE) system, a 5G base station (gNB) in the 5G network architecture (next generation system), a home evolved Node B (HeNB), a relay node, a femto, or a pico, which are not limited in the embodiments of the present disclosure. In some network structures, the network device may include a centralized unit (CU) node and a distributed unit (DU) node; and the centralized unit and the distributed unit may also be geographically separated.

Each of the network device and the terminal can use one or more antennas for multi input multi output (MIMO) transmission between the network device and the terminal. The MIMO transmission may be single user MIMO (SU-MIMO), or multiple user MIMO (MU-MIMO). According to forms and numbers of antenna combinations, MIMO transmission may be two dimensional-MIMO (2D-MIMO), three dimensional-MIMO (3D-MIMO), full dimensional-MIMO (FD-MIMO), or massive-MIMO, or diversity transmission, precoding transmission, or beamforming transmission.

Those skilled in the art should understand that the embodiments of the present application may be provided as methods, systems, or computer program products. Accordingly, in this application, an entirely hardware embodiment, an entirely software embodiment, or an embodiment combining software and hardware aspects may be adopted. Further, this application may adopt the form of a computer program product implemented on one or more computer available storage media (including but not limited to disk memory and optical memory) including computer available program codes.

The present disclosure has been described with reference to the flow charts and/or block diagrams of the method, device (system) and computer program product according to the embodiments of the present disclosure. It should be understood that computer program instructions may be used to implement each of the work flows and/or blocks in the flow charts and/or the block diagrams, and the combination of the work flows and/or blocks in the flow charts and/or the block diagrams. These computer program instructions may be provided to a processor of a common computer, a dedicate computer, an embedded processor or any other programmable data processing apparatus to create a machine, so that instructions executable by the processor of the computer or the other programmable data processing apparatus may create a device to achieve the functions assigned in one or more work flows in the flow chart and/or one or more blocks in the block diagram.

These processor-executable instructions may also be stored in a computer readable storage that may guide the computer or the other programmable data process devices to function in a certain way, so that the instructions stored in the computer readable storage may create a product including an instruction unit which achieves the functions assigned in one or more flows in the flow chart and/or one or more blocks in the block diagram.

These processor-executable instructions may also be loaded in the computer or the other programmable data process devices, so that a series of operation steps are executed on the computer or the other programmable devices to create processes achieved by the computer. Therefore, the instructions executed in the computer or the other programmable devices provide the steps for achieving the function assigned in one or more flows in the flow chart and/or one or more blocks in the block diagram.

It should be noted and understood that the division of the above modules is only a division of logical functions, which may be fully or partially integrated into a physical entity or physically separated in actual implementations. These modules may all be implemented in the form of software called by processing elements; or may all be implemented in the form of hardware; or, some modules may be implemented in the form of software called by processing elements, and some modules may be implemented in the form of hardware. For example, a determining module may be a separate processing element, or may be integrated into a certain chip of the above device, or, may be stored in the memory of the above device in the form of program code, and a certain processing element of the above device may call and execute the functions of the determination module. Other modules have similar implementations. In addition, all or part of these modules may be integrated together, and may be implemented independently. The processing element mentioned herein may be an integrated circuit with signal processing capability. In the implementation process, the various steps of the above method or the above various modules may be implemented by an integrated logic circuit in hardware form in elements of a processor or implemented by instructions in the form of software.

For example, the various modules, units, subunits or submodules may be one or more integrated circuits used to implement the above methods, such as one or more application specific integrated circuits (Application Specific Integrated Circuit, ASIC), or one or more microprocessors (Digital Signal Processor, DSP), or one or more field programmable gate arrays (Field Programmable Gate Array, FPGA), etc. As another example, when a module described above is implemented in the form of scheduling program codes by a processing element, the processing element may be a general purpose processor, such as a central processing unit (Central Processing Unit, CPU) or other processors that may call program codes. As another example, these modules may be integrated together and implemented as a system-on-a-chip (system-on-a-chip, SOC).

Terms such as "first" and "second" in the specification and the claims of the present disclosure are used to distinguish similar objects and are not necessarily used to describe a specific order or sequence. It should be understood that the terms used in this way may be interchanged under appropriate circumstances, so that the embodiments of the present disclosure described herein may be implemented in a sequence other than those illustrated or described herein. In addition, terms such as "including" and "having" and any variations thereof are intended to cover non-exclusive inclusion. For example, a process, method, system, product or device including a series of steps or units is not limited to the steps or units that are clearly listed and may include other steps or units that are not clearly listed or are inherent to the process, method, product, or device. Moreover, the term "and/or" used in the specification and the claims indicates involving at least one of connected objects, for example, A and/or B and/or C means 7 situations, including: A alone, B alone, C alone, both A and B, both B and C, both A and C, and all of A, B and C. Similarly, the use of "at least one of A and B" in this specification and claims should be understood as "A alone, B alone, or both A and B".

Obviously, those skilled in the art can make various changes and modifications to the present disclosure without departing from the spirit and scope of the present disclosure. Thus, if these modifications and variations of the present disclosure fall within the scope of the claims of the present disclosure and equivalent technologies thereof, the present disclosure also intends to include these modifications and variations.

## Claims

1. A data processing method, comprising:
sending, by a network device, first indication information; wherein the first indication information is used to determine first user equipment (UE);
receiving, by the network device, first information and/or a first signal sent by a second user equipment; wherein the first information and/or the first signal is sent by the second user equipment when the second user equipment determines that the second user equipment serves as the first user equipment; and
sending, by the network device, the received first information and/or first signal to a first device; or, according to the received first information and/or first signal, performing, by the network device, one or more of the following: training of a first model, performance monitoring of the first model, and updating of the first model;
wherein the first model is used to determine UE location-related information.

2. The method according to claim 1, wherein the sending, by a network device, first indication information, includes:
sending, by the network device, the first indication information, via broadcasting or multicasting.

3. The method according to claim 1, wherein after the network device receives the first signal, the method further includes:
determining, by the network device, first information according to the first signal.

4. The method according to any one of claims 1 to 3, wherein the first information includes at least one of the following:
channel observation result; location-related information of the first user equipment.

5. The method according to claim 1, wherein the first indication information includes one or more of the following:
range information that the location-related information of the first user equipment needs to meet;
quality information that the location-related information of the first user equipment needs to meet;
threshold information that needs to be met between the location-related information of the first user equipment and location-related information of a first reference device, wherein the first reference device is a device used to determine the first user equipment.

6. The method according to claim 5, wherein the location-related information includes one or more of the following: location information; time-related information; angle-related information; path indication information.

7. The method according to claim 6, wherein the range information that the location-related information of the first user equipment needs to meet, includes one or more of the following:
a location range that the location information of the first user equipment needs to meet;
a time range that the time-related information of the first user equipment needs to meet;
an angle range that the angle-related information of the first user equipment needs to meet.

8. The method according to claim 6, wherein the quality information that the location-related information of the first user equipment needs to meet, includes:
location quality information that the location information of the first user equipment needs to meet;
time quality information that the time-related information of the first user equipment needs to meet;
angle quality information that the angle-related information of the first user equipment needs to meet;
path indication quality information that the path indication information of the first user equipment needs to meet.

9. The method according to claim 6, wherein threshold information that needs to be met between the location-related information of the first user equipment and the location-related information of the first reference device, includes:
a distance threshold that a distance between a location of the first user equipment and a location of the first reference device needs to meet;
a time threshold that a time difference between the time-related information of the first user equipment and time-related information of the first reference device needs to meet;
an angle threshold that an angle difference between the angle-related information of the first user equipment and angle-related information of the first reference device needs to meet.

10. The method according to claim 1, wherein the method further includes:
determining, by the network device, reference location-related information and actual location-related information of a second reference device;
determining, by the network device, the first indication information according to the reference location-related information and the actual location-related information.

11. The method according to claim 10, wherein the second reference device includes one or more of the following:
positioning reference unit (PRU); a user equipment that is aware of actual location-related information.

12. The method according to claim 11, wherein the method further includes:
receiving, by the network device, one or more of the following items sent by the second reference device:
reference location-related information of the second reference device; actual location-related information of the second reference device; and an obtaining method of the actual location-related information.

13. The method according to claim 10, wherein the determining, by the network device, the first indication information according to the reference location-related information and the actual location-related information, includes:
determining, by the network device, a first reference device according to the reference location-related information and the actual location-related information;
determining, by the network device, the first indication information according to the first reference device.

14. The method according to claim 13, wherein the determining, by the network device, a first reference device according to the reference location-related information and the actual location-related information, includes:
calculating, by the network device, an error between the reference location-related information and the actual location-related information;
determining, by the network device, the first reference device according to the error and an error threshold.

15. The method according to claim 13, wherein the determining, by the network device, a first reference device according to the reference location-related information and the actual location-related information, includes:
sending, by the network device, an error threshold, wherein the error threshold is used to determine the first reference device;
determining, by the network device, a second reference device that sends the reference location-related information and the actual location-related information, as the first reference device; wherein an error between the reference location-related information and the actual location-related information of the first reference device meets the error threshold.

16. The method according to claim 15, wherein the method further includes:
receiving, by the network device, actual location-related information sent by a third reference device; wherein the third reference device sends the actual location-related information when the third reference device receives the error threshold and determines that an error between reference location-related information and actual location-related information of the third reference device does not meet the error threshold.

17. The method according to claim 2 or 3, wherein the first information and/or first signal received by the network device is sent by the first user equipment when the first user equipment receives the first indication information and the location-related information of the first user equipment meets the first indication information.

18. The method according to claim 5, wherein the first indication information further includes: location-related information of the first reference device.

19. The method according to claim 10, wherein a time when the reference location-related information of the second reference device is determined, and a time when the actual location-related information of the second reference device is determined, both meet a first validity time; and/or
a time difference between a time when the reference location-related information of the second reference device is determined and a time when the actual location-related information of the second reference device is determined, meets a time threshold.

20. The method according to claim 19, wherein the method further includes:
determining, by the network device, the first validity time and/or the time threshold.

21. A data processing method, comprising:
receiving, by a second user equipment (UE), first indication information; wherein the first indication information is used to determine a first user equipment to obtain first information of the first user equipment;
wherein the first information is used for one or more of the following:
training of a first model; performance monitoring of the first model; updating of the first model;
wherein the first model is used to determine UE location-related information.

22. The method according to claim 21, wherein after the second user equipment receives the first indication information, the method further includes:
sending, by the second user equipment, first information and/or first signal;
wherein the first signal is used to determine the first information.

23. The method according to claim 22, wherein the sending, by the second user equipment, first information and/or first signal, includes:
when the second user equipment receives the first indication information and determines that location-related information of the second user equipment meets the first indication information, sending, by the second user equipment, the first information and/or the first signal.

24. A data processing method, comprising:
obtaining, by a network device, first information of third user equipment (UE);
determining, by the network device, first user equipment from the third user equipment according to the first indication information;
wherein the first information of the first user equipment is used for one or more of the following: training of the first model; performance monitoring of the first model; updating of the first model;
wherein the first model is used to determine UE location-related information.

25. The method according to claim 24, wherein the obtaining, by a network device, first information of third user equipment (UE), includes:
receiving, by network device, the first information sent by the third user equipment.

26. The method according to claim 24, wherein the obtaining, by a network device, first information of third user equipment (UE), includes:
receiving, by network device, a first signal sent by the third user equipment;
determining, by network device, first information according to the first signal.

27. The method according to claim 24, wherein the method further includes:
performing, by the network device, one or more of the following according to the first information of the first user equipment:
training of the first model; performance monitoring of the first model; and updating of the first model.

28. The method according to claim 24, wherein the method further includes:
determining, by the network device, reference location-related information and actual location-related information of a second reference device;
determining, by the network device, the first indication information according to the reference location-related information and the actual location-related information.

29. A data processing method, comprising:
sending, by third user equipment (UE), first information and/or first signal;
wherein the first signal is used to determine the first information;
when the third user equipment serves as first user equipment, the first information is used for one or more of the following: training of a first model; performance monitoring of the first model; updating of the first model;
wherein the first model is used to determine UE location-related information.

30. The method according to claim 29, wherein the first information includes at least one of the following:
channel observation result; location-related information of the first user equipment.

31. A data processing apparatus, comprising: a memory, a transceiver, and a processor;
wherein the memory is used to store program instructions; the transceiver is used to send and receive data under control of the processor; the processor is used to read the program instructions in the memory and perform the following operations:
sending first indication information; wherein the first indication information is used to determine first user equipment (UE);
receiving first information and/or a first signal sent by a second user equipment; wherein the first information and/or the first signal is sent by the second user equipment when the second user equipment determines that the second user equipment serves as the first user equipment;
sending the received first information and/or first signal to a first device; or, according to the received first information and/or first signal, performing one or more of the following: training of a first model, performance monitoring of the first model, and updating of the first model;
wherein the first model is used to determine UE location-related information.

32. The apparatus according to claim 31, wherein the processor is further used to send the first indication information via broadcasting or multicasting.

33. The apparatus according to claim 31, wherein the processor is further used to determine first information according to the first signal.

34. The apparatus according to any one of claims 31 to 33, wherein the first information includes at least one of the following:
channel observation result; location-related information of the first user equipment.

35. The apparatus according to claim 31, wherein the first indication information includes one or more of the following:
range information that the location-related information of the first user equipment needs to meet;
quality information that the location-related information of the first user equipment needs to meet;
threshold information that needs to be met between the location-related information of the first user equipment and location-related information of a first reference device, wherein the first reference device is a device used to determine the first user equipment.

36. The apparatus according to claim 35, wherein the location-related information includes one or more of the following: location information; time-related information; angle-related information; path indication information.

37. The apparatus according to claim 36, wherein the range information that the location-related information of the first user equipment needs to meet, includes one or more of the following:
a location range that the location information of the first user equipment needs to meet;
a time range that the time-related information of the first user equipment needs to meet;
an angle range that the angle-related information of the first user equipment needs to meet.

38. The apparatus according to claim 36, wherein the quality information that the location-related information of the first user equipment needs to meet, includes:
location quality information that the location information of the first user equipment needs to meet;
time quality information that the time-related information of the first user equipment needs to meet;
angle quality information that the angle-related information of the first user equipment needs to meet;
path indication quality information that the path indication information of the first user equipment needs to meet.

39. The apparatus according to claim 36, wherein threshold information that needs to be met between the location-related information of the first user equipment and the location-related information of the first reference device, includes:
a distance threshold that a distance between a location of the first user equipment and a location of the first reference device needs to meet;
a time threshold that a time difference between the time-related information of the first user equipment and time-related information of the first reference device needs to meet;
an angle threshold that an angle difference between the angle-related information of the first user equipment and angle-related information of the first reference device needs to meet.

40. The apparatus according to claim 31, wherein the processor is further used to:
determine reference location-related information and actual location-related information of a second reference device;
determine the first indication information according to the reference location-related information and the actual location-related information.

41. The apparatus according to claim 40, wherein the second reference device includes one or more of the following:
positioning reference unit (PRU); a user equipment that is aware of actual location-related information.

42. The apparatus according to claim 41, wherein the processor is further used to:
receive one or more of the following items sent by the second reference device:
reference location-related information of the second reference device; actual location-related information of the second reference device; and an obtaining method of the actual location-related information.

43. The apparatus according to claim 40, wherein the processor is further used to:
determine a first reference device according to the reference location-related information and the actual location-related information;
determine the first indication information according to the first reference device.

44. The apparatus according to claim 43, wherein the processor is further used to:
calculate an error between the reference location-related information and the actual location-related information;
determine the first reference device according to the error and an error threshold.

45. The apparatus according to claim 43, wherein the processor is further used to:
send an error threshold, wherein the error threshold is used to determine the first reference device;
determine a second reference device that sends the reference location-related information and the actual location-related information, as the first reference device; wherein an error between the reference location-related information and the actual location-related information of the first reference device meets the error threshold.

46. The apparatus according to claim 45, wherein the processor is further used to:
receive actual location-related information sent by a third reference device; wherein the third reference device sends the actual location-related information when the third reference device receives the error threshold and determines that an error between reference location-related information and actual location-related information of the third reference device does not meet the error threshold.

47. The apparatus according to claim 32 or 33, wherein the first information and/or first signal received by the network device is sent by the first user equipment when the first user equipment receives the first indication information and the location-related information of the first user equipment meets the first indication information.

48. The apparatus according to claim 35, wherein the first indication information further includes: location-related information of the first reference device.

49. The apparatus according to claim 40, wherein a time when the reference location-related information of the second reference device is determined, and a time when the actual location-related information of the second reference device is determined, both meet a first validity time; and/or
a time difference between a time when the reference location-related information of the second reference device is determined and a time when the actual location-related information of the second reference device is determined, meets a time threshold.

50. The apparatus according to claim 49, wherein the processor is further used to:
determine the first validity time and/or the time threshold.

51. A data processing apparatus, comprising:
a first sending module used to send first indication information; wherein the first indication information is used to determine first user equipment (UE);
a first receiving module used to receive first information and/or a first signal sent by a second user equipment; wherein the first information and/or the first signal is sent by the second user equipment when the second user equipment determines that the second user equipment serves as the first user equipment;
a first processing module used to send the received first information and/or first signal to a first device; or, according to the received first information and/or first signal, perform one or more of the following: training of a first model, performance monitoring of the first model, and updating of the first model;
wherein the first model is used to determine UE location-related information.

52. The apparatus according to claim 51, wherein the first sending module is further used to send the first indication information via broadcasting or multicasting.

53. The apparatus according to claim 51, wherein the apparatus further includes:
a second determining module used to determine first information according to the first signal.

54. The apparatus according to any one of claims 51 to 53, wherein the first information includes at least one of the following:
channel observation result; location-related information of the first user equipment.

55. The apparatus according to claim 51, wherein the first indication information includes one or more of the following:
range information that the location-related information of the first user equipment needs to meet;
quality information that the location-related information of the first user equipment needs to meet;
threshold information that needs to be met between the location-related information of the first user equipment and location-related information of a first reference device, wherein the first reference device is a device used to determine the first user equipment.

56. The apparatus according to claim 55, wherein the location-related information includes one or more of the following: location information; time-related information; angle-related information; path indication information.

57. The apparatus according to claim 56, wherein the range information that the location-related information of the first user equipment needs to meet, includes one or more of the following:
a location range that the location information of the first user equipment needs to meet;
a time range that the time-related information of the first user equipment needs to meet;
an angle range that the angle-related information of the first user equipment needs to meet.

58. The apparatus according to claim 56, wherein the quality information that the location-related information of the first user equipment needs to meet, includes:
location quality information that the location information of the first user equipment needs to meet;
time quality information that the time-related information of the first user equipment needs to meet;
angle quality information that the angle-related information of the first user equipment needs to meet;
path indication quality information that the path indication information of the first user equipment needs to meet.

59. The apparatus according to claim 56, wherein threshold information that needs to be met between the location-related information of the first user equipment and the location-related information of the first reference device, includes:
a distance threshold that a distance between a location of the first user equipment and a location of the first reference device needs to meet;
a time threshold that a time difference between the time-related information of the first user equipment and time-related information of the first reference device needs to meet;
an angle threshold that an angle difference between the angle-related information of the first user equipment and angle-related information of the first reference device needs to meet.

60. The apparatus according to claim 51, wherein the apparatus further includes:
a third determination module used to determine reference location-related information and actual location-related information of a second reference device;
a fourth determining module used to determine the first indication information according to the reference location-related information and the actual location-related information.

61. The apparatus according to claim 60, wherein the second reference device includes one or more of the following:
positioning reference unit (PRU); a user equipment that is aware of actual location-related information.

62. The apparatus according to claim 61, wherein the apparatus further includes:
a third receiving module used to receive one or more of the following items sent by the second reference device:
reference location-related information of the second reference device; actual location-related information of the second reference device; and an obtaining method of the actual location-related information.

63. The apparatus according to claim 60, wherein the fourth determining module includes:
a first determining unit used to determine a first reference device according to the reference location-related information and the actual location-related information;
a second determining unit used to determine the first indication information according to the first reference device.

64. The apparatus according to claim 63, wherein the first determining unit is further used to:
calculate an error between the reference location-related information and the actual location-related information;
determine the first reference device according to the error and an error threshold.

65. The apparatus according to claim 63, wherein the fourth determining module includes:
a first sending unit used to send an error threshold, wherein the error threshold is used to determine the first reference device;
a third determination unit used to determine a second reference device that sends the reference location-related information and the actual location-related information, as the first reference device; wherein an error between the reference location-related information and the actual location-related information of the first reference device meets the error threshold.

66. The apparatus according to claim 65, wherein the apparatus further includes:
a fourth receiving module used to receive actual location-related information sent by a third reference device; wherein the third reference device sends the actual location-related information when the third reference device receives the error threshold and determines that an error between reference location-related information and actual location-related information of the third reference device does not meet the error threshold.

67. The apparatus according to claim 52 or 53, wherein the first information and/or first signal received by the network device is sent by the first user equipment when the first user equipment receives the first indication information and the location-related information of the first user equipment meets the first indication information.

68. The apparatus according to claim 65, wherein the first indication information further includes: location-related information of the first reference device.

69. The apparatus according to claim 60, wherein a time when the reference location-related information of the second reference device is determined, and a time when the actual location-related information of the second reference device is determined, both meet a first validity time; and/or
a time difference between a time when the reference location-related information of the second reference device is determined and a time when the actual location-related information of the second reference device is determined, meets a time threshold.

70. The apparatus according to claim 69, wherein the apparatus further includes:
a fifth determination module used to determine the first validity time and/or the time threshold.

71. A data processing apparatus, comprising: a memory, a transceiver, and a processor; wherein the memory is used to store program instructions; the transceiver is used to send and receive data under control of the processor; the processor is used to read the program instructions in the memory and perform the following operations:
receiving first indication information; wherein the first indication information is used to determine a first user equipment to obtain first information of the first user equipment;
wherein the first information is used for one or more of the following:
training of a first model; performance monitoring of the first model; updating of the first model;
wherein the first model is used to determine UE location-related information.

72. The apparatus according to claim 71, wherein the processor is further used to send first information and/or first signal; wherein the first signal is used to determine the first information.

73. The apparatus according to claim 72, wherein the processor is further used to:
when the second user equipment receives the first indication information and determines that location-related information of the second user equipment meets the first indication information, send the first information and/or the first signal.

74. A data processing apparatus, comprising:
a second receiving module used to receive first indication information; wherein the first indication information is used to determine a first user equipment to obtain first information of the first user equipment;
wherein the first information is used for one or more of the following:
training of a first model; performance monitoring of the first model; updating of the first model;
wherein the first model is used to determine UE location-related information.

75. The apparatus according to claim 74, wherein the apparatus further includes:
a third sending module used to send first information and/or first signal; wherein the first signal is used to determine the first information.

76. The apparatus according to claim 75, wherein the third sending module is further used to:
when the second user equipment receives the first indication information and determines that location-related information of the second user equipment meets the first indication information, send the first information and/or the first signal.

77. A data processing apparatus, comprising: a memory, a transceiver, and a processor;
wherein the memory is used to store program instructions; the transceiver is used to send and receive data under control of the processor; the processor is used to read the program instructions in the memory and perform the following operations:
obtaining first information of third user equipment (UE);
determining first user equipment from the third user equipment according to the first indication information;
wherein the first information of the first user equipment is used for one or more of the following: training of the first model; performance monitoring of the first model; updating of the first model;
wherein the first model is used to determine UE location-related information.

78. The apparatus according to claim 77, wherein the processor is further used to receive the first information sent by the third user equipment.

79. The apparatus according to claim 77, wherein the processor is further used to:
receive a first signal sent by the third user equipment;
determine first information according to the first signal.

80. The apparatus according to claim 77, wherein the processor is further used to perform one or more of the following according to the first information of the first user equipment:
training of the first model; performance monitoring of the first model; and updating of the first model.

81. The apparatus according to claim 77, wherein the processor is further used to:
determine reference location-related information and actual location-related information of a second reference device;
determine the first indication information according to the reference location-related information and the actual location-related information.

82. A data processing apparatus, comprising:
an obtaining module used to obtain first information of third user equipment (UE);
a first determining module used to determine first user equipment from the third user equipment according to the first indication information;
wherein the first information of the first user equipment is used for one or more of the following: training of the first model; performance monitoring of the first model; updating of the first model;
wherein the first model is used to determine UE location-related information.

83. The apparatus according to claim 82, wherein the obtaining module is further used to receive the first information sent by the third user equipment.

84. The apparatus according to claim 82, wherein the obtaining module is further used to:
receive a first signal sent by the third user equipment;
determine first information according to the first signal.

85. The apparatus according to claim 82, wherein the apparatus further includes:
a second processing module used to perform one or more of the following according to the first information of the first user equipment:
training of the first model; performance monitoring of the first model; and updating of the first model.

86. The apparatus according to claim 82, wherein the apparatus further includes:
a sixth determination module used to determine reference location-related information and actual location-related information of a second reference device;
a seventh determination module used to determine the first indication information according to the reference location-related information and the actual location-related information.

87. A data processing apparatus, comprising: a memory, a transceiver, and a processor; wherein the memory is used to store program instructions; the transceiver is used to send and receive data under control of the processor; the processor is used to read the program instructions in the memory and perform the following operations:
sending first information and/or first signal;
wherein the first signal is used to determine the first information;
when the third user equipment serves as first user equipment, the first information is used for one or more of the following: training of a first model; performance monitoring of the first model; updating of the first model;
wherein the first model is used to determine UE location-related information.

88. The apparatus according to claim 87, wherein the first information includes at least one of the following:
channel observation result; location-related information of the first user equipment.

89. A data processing apparatus, comprising:
a second sending module used to send first information and/or first signal;
wherein the first signal is used to determine the first information;
when the third user equipment serves as first user equipment, the first information is used for one or more of the following: training of a first model; performance monitoring of the first model; updating of the first model;
wherein the first model is used to determine UE location-related information.

90. The apparatus according to claim 89, wherein the first information includes at least one of the following:
channel observation result; location-related information of the first user equipment.

91. A processor-readable storage medium, comprising a computer program stored thereon; wherein the computer program is used to cause a processor to execute the data processing method according to any one of claims 1 to 20, or the data processing method according to any one of claims 21 to 23, or the data processing method according to any one of claims 24 to 28, or the data processing method according to claim 29 or 30.
